(19) Europäisches Patentamt / European Patent Office / Office européen des brevets

(11) EP 2 985 882 A1

(12) **EUROPEAN PATENT APPLICATION**
published in accordance with Art. 153(4) EPC

(43) Date of publication:
**17.02.2016 Bulletin 2016/07**

(21) Application number: **15733150.5**

(22) Date of filing: **06.01.2015**

(51) Int Cl.:
***H02J 50/00*** *(2016.01)* ***H02J 7/00*** *(2006.01)*

(86) International application number:
**PCT/JP2015/050170**

(87) International publication number:
**WO 2015/102116 (09.07.2015 Gazette 2015/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.01.2014 JP 2014000459**
**20.05.2014 JP 2014104421**

(71) Applicant: **Nitto Denko Corporation**
**Ibaraki-shi, Osaka 567-8680 (JP)**

(72) Inventors:
- **TSUDA, Hisashi**
**Ibaraki-shi**
**Osaka 567-8680 (JP)**
- **HATANAKA, Takezo**
**Ibaraki-shi**
**Osaka 567-8680 (JP)**

(74) Representative: **Müller-Boré & Partner Patentanwälte PartG mbB**
**Friedenheimer Brücke 21**
**80639 München (DE)**

# (54) WIRELESS POWER TRANSMISSION DEVICE

(57) There is provided a wireless power transmission apparatus in which a relationship among (i) a transmission state input impedance of the wireless power transmission apparatus in a situation where a power-supplying resonator and a power-receiving resonator are disposed to oppose each other, (ii) a metal foreign object placement state input impedance of the wireless power transmission apparatus in a situation where a metal foreign obj ect is placed in the vicinity of the power-supplying resonator, and (iii) a standby state input impedance of a power-supplying module in a standby state, satisfies the following condition: the metal foreign object placement state input impedance > the standby state input impedance > the transmission state input impedance.

FIG.3

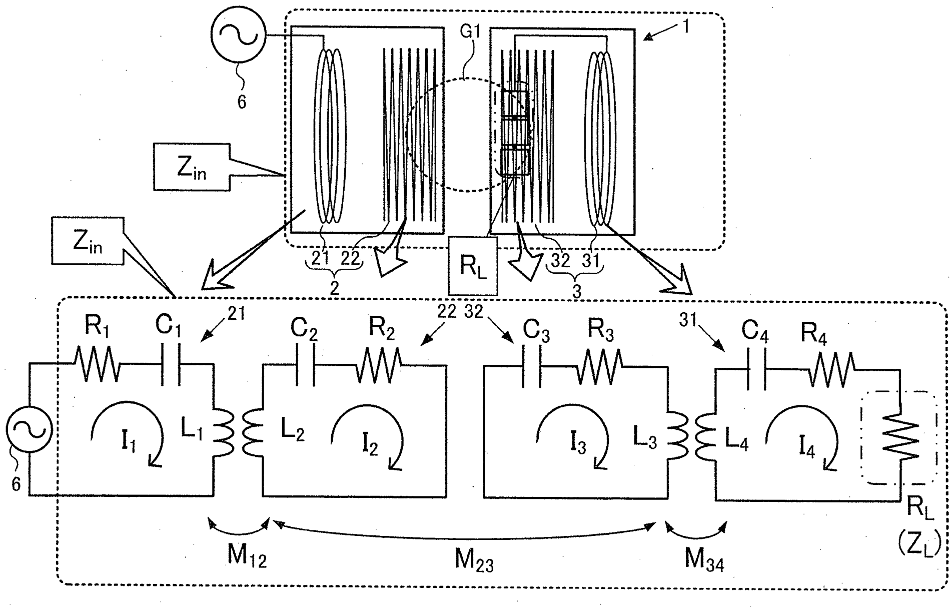


EP 2 985 882 A1

**Description**

Technical Field

The present invention relates to a wireless power transmission apparatus configured to supply power by means of a resonance phenomenon occurring between a power-supplying module and a power-receiving module.

Background Art

Portable electronic devices such as laptop PCs, tablet PCs, digital cameras, mobile phones, portable gaming devices, earphone-type music players, wireless headsets, hearing aids, recorders, which are portable while being used by the user have rapidly increased in recent years. Many of these portable electronic devices have therein a secondary battery, which requires periodical charging. To facilitate the work for charging the secondary battery of such an electronic device, there are an increasing number of devices for charging secondary batteries by using a power-supplying technology that performs wireless power transmission between a power-supplying module and a power-receiving module mounted in the electronic device (wireless power transmission technology performing power transmission by varying the magnetic field).

As a wireless power transmission technology, there have been known, for example, a technology that performs power transmission by means of electromagnetic induction between coils (e.g. see Patent Literature 1), a technology that performs power transmission by coupling magnetic fields by means of a resonance phenomenon (magnetic field resonant state) between resonators (coils) provided to a power-supplying device (power-supplying module) and a power-receiving device (power-receiving module)(e.g. see Patent Literature 2).

In designing a power-supplying device and a power-receiving device using such a wireless power transmission technology, it is required to enhance a power transmission efficiency, which is the ratio of the power received by the power-receiving device to the power supplied to the power-supplying device, to reduce a power loss during wireless power transmission.

As described in Background Art of Patent Literature 3 (see paragraphs [0008] to [0010]) and in the specification of a wireless power transmission system of Patent Literature 4, it is generally known that the power transmission efficiency of wireless power supply is maximized (see paragraph [0013] of Patent Literature 4), by matching the resonance frequencies of resonators provided in the power-supplying device and the power-receiving device to the power-source frequency (driving frequency) of the power supplied to the power-supplying device (or matching the power-source frequency (driving frequency) to the resonance frequencies of the resonators provided in the power-supplying device and the power-receiving device). Such a setting is generally practiced to maximize the power transmission efficiency.

Citation List

Patent Literature

Patent Literature 1: Japanese patent No. 4624768
Patent Literature 2: Japanese Unexamined Paten Publication No. 239692/2013
Patent Literature 3: Japanese Unexamined Paten Publication No. 050140/2011
Patent Literature 4: Japanese Unexamined Paten Publication No. 182975/2012

Summary of Invention

Technical Problem

To perform wireless power transmission by coupling magnetic fields utilizing a resonance phenomenon (magnetic field resonant state) between resonators (coils) of a power-supplying module and a power-receiving module, the power-receiving module needs to be brought close to the power-supplying module so that they are within a distance (power-suppliable region) that enables power supply from the power-supplying module to the power-receiving module. If, during such a usage process, a metal foreign object is placed in the vicinity of the power-supplying module, the metal foreign object is influenced by the magnetic field, and an eddy current is induced. If such an eddy current is induced, excessive heat may occur in the metal foreign object and/or the power-supplying module, which is disadvantageous.

In particular, when the resonance frequencies of the resonators provided in the power-supplying device and the power-receiving device are matched to the power-source frequency (driving frequency) of the power supplied to the power-supplying device to maximize the power transmission efficiency, the input impedance of the power-supplying module with the metal foreign object in the situation where the metal foreign object is placed in the vicinity of the power-supplying module (the total of the impedance of the power-supplying module and that of the metal foreign object in this situation) is lower than the input impedance of the power-supplying module in a standby state, i.e., in the situation where the metal foreign object is not placed in the vicinity of the power-supplying module (see FIG. 12 to FIG. 15). Under such a circumstance where the input impedance $Z_{in}$ of the power-supplying module with the metal foreign object is low, the current value at a given voltage is high (see formula: $I = V/Z_{in}$), which increases power consumption in the power-supplying module, and may generate excessive heat in the power-supplying module.

In view of the above problems, it is an object of the present invention to provide a wireless power transmission apparatus capable of preventing generation of excessive heat in a power-supplying module by a setting to make higher the input impedance of the power-supplying module with a metal foreign object in the situation where the metal foreign object is placed in the vicinity of the power-supplying module.

Solution to Problem

According to an aspect of the invention to solve the above problem, a wireless power transmission apparatus in which setting is made so that a transmission characteristic between a power-supplying resonator included in a power-supplying module and a power-receiving resonator included in a power-receiving module relative to a power-source frequency of power has two peak portions, the wireless power transmission apparatus configured to supply power by means of a resonance phenomenon occurring between the power-supplying module and the power-receiving module, wherein:

> the power-source frequency is set to a frequency within a frequency band corresponding to a higher peak portion which is formed on a higher frequency side between the two peak portions of the transmission characteristic; and
> a relationship among input impedances in a setting where the power-source frequency is set to the frequency within the frequency band corresponding to the higher peak portion of the two peak portions of the transmission characteristic, which input impedances are (i) a transmission state input impedance of the wireless power transmission apparatus in a situation where the power-supplying resonator and the power-receiving resonator are disposed to oppose each other, (ii) a metal foreign object placement state input impedance of the wireless power transmission apparatus in a situation where a metal foreign obj ect is placed in the vicinity of the power-supplying resonator, and (iii) a standby state input impedance of the power-supplying module, satisfies the following condition: the metal foreign object placement state input impedance > the standby state input impedance > the transmission state input impedance.

With the above structure, the power-source frequency of power supplied to the power-supplying module is set to a frequency within the frequency band corresponding to the higher peak portion which is formed on the higher frequency side between the two peak portions of the transmission characteristic; and the wireless power transmission apparatus is designed to satisfy the condition that the metal foreign object placement state input impedance > the standby state input impedance > the transmission state input impedance. Thereby, the metal foreign object placement state input impedance is higher than the standby state input impedance and the transmission state input impedance even though the metal foreign object is placed in the vicinity of the power-supplying resonator included in the power-supplying module. With this, the current value in the power-supplying module is lower, and thus heat generation and generation of eddy currents are reduced.

According to another aspect of the invention to solve the above problem, the wireless power transmission apparatus is arranged so that: the power-supplying module includes at least a power-supplying coil and the power-supplying resonator;
the power-receiving module includes at least the power-receiving resonator and a power-receiving coil;
the power-supplying coil includes an RLC circuit whose elements include a resistor $R_1$, a coil $L_1$, and a capacitor $C_1$, and whose total impedance is $Z_1$;
the power-supplying resonator includes an RLC circuit whose elements include a resistor $R_2$, a coil $L_2$, and a capacitor $C_2$, and whose total impedance is $Z_2$;
the power-receiving resonator includes an RLC circuit whose elements include a resistor $R_3$, a coil $L_3$, and a capacitor $C_3$, and whose total impedance is $Z_3$;
the power-receiving coil includes an RLC circuit whose elements include a resistor $R_4$, a coil $L_4$, and a capacitor $C_4$, and whose total impedance is $Z_4$;
a total load impedance of devices to which power is supplied from the power-receiving coil is $Z_L$;
a mutual inductance between the coil $L_1$ of the power-supplying coil and the coil $L_2$ of the power-supplying resonator is $M_{12}$;
a mutual inductance between the coil $L_2$ of the power-supplying resonator and the coil $L_3$ of the power-receiving resonator

is $M_{23}$; a mutual inductance between the coil $L_3$ of the power-receiving resonator and the coil $L_4$ of the power-receiving coil is $M_{34}$,
a mutual inductance between the coil $L_2$ of the power-supplying resonator and a coil $L_m$ of the metal foreign object is $M_{2m}$; element values of circuit elements constituting the power-supplying coil, the power-supplying resonator, the power-receiving resonator, and the power-receiving coil and the mutual inductances are used as parameters, and the metal foreign object is assumed as an RL circuit whose elements include a resistor $R_m$ and the coil $L_m$; and
the metal foreign object placement state input impedance, the standby state input impedance, and the transmission state input impedance are respectively expressed in the following design formulae.

$$\text{Metal Foreign Object Placement State Input Impedance} = \left( R_1 + \frac{(\omega M_{12})^2 \left( R_2 + \frac{(\omega M_{2m})^2 R_m}{R_m^2 + (\omega L_m)^2} \right)}{\left( R_2 + \frac{(\omega M_{2m})^2 R_m}{R_m^2 + (\omega L_m)^2} \right)^2 + \left( \omega L_2 - \frac{1}{\omega C_2} - \frac{(\omega M_{2m})^2 \omega L_m}{R_m^2 + (\omega L_m)^2} \right)^2} \right) + j\left( \omega L_1 - \frac{1}{\omega C_1} - \frac{(\omega M_{12})^2 \left( \omega L_2 - \frac{1}{\omega C_2} - \frac{(\omega M_{2m})^2 \omega L_m}{R_m^2 + (\omega L_m)^2} \right)}{\left( R_2 + \frac{(\omega M_{2m})^2 R_m}{R_m^2 + (\omega L_m)^2} \right)^2 + \left( \omega L_2 - \frac{1}{\omega C_2} - \frac{(\omega M_{2m})^2 \omega L_m}{R_m^2 + (\omega L_m)^2} \right)^2} \right)$$

$$\text{Standby State Input Impedance} = \left[ R_1 + \frac{(\omega M_{12})^2 R_2}{R_2^2 + \left( \omega L_2 - \frac{1}{\omega C_2} \right)^2} \right] + j\left[ \omega L_1 - \frac{1}{\omega C_1} - \frac{(\omega M_{12})^2 \left( \omega L_2 - \frac{1}{\omega C_2} \right)}{R_2^2 + \left( \omega L_2 - \frac{1}{\omega C_2} \right)^2} \right]$$

$$\text{Transmission State Input Impedance} = Z_1 + \frac{(\omega M_{12})^2}{Z_2 + \frac{(\omega M_{23})^2}{Z_3 + \frac{(\omega M_{34})^2}{Z_4 + Z_L}}}$$

In the above structure, the apparatus is arranged to have the circuit configuration satisfying the above formulae. Thereby, the metal foreign object placement state input impedance is higher than the standby state input impedance and the transmission state input impedance even though the metal foreign object is placed in the vicinity of the power-supplying resonator included in the power-supplying module. With this, the current value in the power-supplying module is lower, and thus heat generation and generation of eddy currents are reduced.

According to another aspect of the invention to solve the above problem, the wireless power transmission apparatus further includes: a detector configured to detect an input impedance; and a control unit configured to determine that the metal foreign object is placed in the vicinity of the power-supplying resonator when the input impedance detected by the detector is higher than the standby state input impedance.

With the above structure, it is determined that the metal foreign object is placed in the vicinity of the power-supplying resonator when the input impedance detected by the detector is higher than the standby state input impedance. Thus, safe power supply is realized.

According to another aspect of the invention to solve the above problem, the control unit is configured to stop power supply to the power-supplying module when the control unit determines that the metal foreign object is placed in the vicinity of the power-supplying resonator.

With the above structure, when the control unit determines that the metal foreign object is placed in the vicinity of the power-supplying resonator, the power supply to the power-supplying module is stopped. This prevents problems such as heat generation and generation of eddy currents caused by the power supply performed in the situation where the metal foreign object is placed in the vicinity of the power-supplying resonator.

According to another aspect of the invention to solve the above problem, the wireless power transmission apparatus further includes a reporting device configured to give a report to an outside, and
the control unit is configured to control the reporting device to report that the metal foreign object is placed in the vicinity of the power-supplying resonator when the control unit determines that the metal foreign object is placed in the vicinity of the power-supplying resonator.

With the above structure, when the control unit determines that the metal foreign object is placed in the vicinity of the power-supplying resonator, the control unit controls the reporting device to report that the metal foreign object is placed in the vicinity of the power-supplying resonator.

According to an aspect of the invention to solve the above problem, there is provided a wireless power transmission apparatus in which a transmission characteristic between a power-supplying resonator included in a power-supplying module and a power-receiving resonator included in a power-receiving module relative to a power-source frequency of power has two peak portions; and a relationship between input impedances in a setting where the power-source frequency is set to a frequency within a frequency band corresponding to a higher peak portion which is formed on a higher frequency side between the two peak portions of the transmission characteristic, which impedances are (i) a transmission state input impedance in a situation where wireless power supply is performed between the power-supplying module and the power-receiving module and (ii) a non-transmission state input impedance in a situation where wireless power supply is not performed, satisfies the following condition: the non-transmission state input impedance > the transmission state input impedance, the wireless power transmission apparatus including:

- an output oscillator configured to turn on and off power supply to the power-supplying module;
- a current detector configured to detect a current value input from the output oscillator to the power-supplying module; and
- a comparator circuit configured to perform the following operations of (a) comparing a first current value detected by the current detector with a threshold value set to a value between (i) a current value input to the power-supplying module in the situation where wireless power supply is performed between the power-supplying module and the power-receiving module and (ii) a current value input to the power-supplying module in the situation where wireless power supply is not performed between the power-supplying module and the power-receiving module, (b) when it is determined that the first current value detected by the current detector is not smaller than the threshold value, comparing a second current value detected by the current detector for the second time with the threshold value, and (c) when it is determined that the second current value is smaller than the threshold value, outputting an OFF control signal to the output oscillator to turn off the power supply to the power-supplying module in the output oscillator.

With the above structure, because the condition that the non-transmission state input impedance > the transmission state input impedance is satisfied, the input current value in the situation where the wireless power supply is performed between the power-supplying module and the power-receiving module is higher than the input current value in the situation where the wireless power supply is not performed between the power-supplying module and the power-receiving module. Further, the threshold value is set to a value between the input current value in the situation where the wireless power supply is performed and the input current value in the situation where the wireless power supply is not performed.
Then, when the first current value which is detected by the current detector and is input from the output oscillator to the power-supplying module is not smaller than the threshold value and when the second current value detected by the current detector for the second time is compared with the threshold value and is determined as being smaller than the threshold value, it is determined that shifting occurs from the situation where the wireless power supply is performed between the power-supplying module and the power-receiving module to the situation where the wireless power supply is not performed between the power-supplying module and the power-receiving module, and the power supply to the power-supplying module is turned off (stopped) by the output oscillator. Thus, power consumption is reduced.

According to an aspect of the invention to solve the above problem, the wireless power transmission apparatus is arranged so that: a relationship among input impedances in a setting where the power-source frequency is set to the frequency within the frequency band corresponding to the higher peak portion of the two peak portions of the transmission characteristic, which input impedances are (i) a transmission state input impedance of the wireless power transmission apparatus in a situation where the power-supplying resonator and the power-receiving resonator are disposed to oppose each other, (ii) a metal foreign object placement state input impedance of the wireless power transmission apparatus in a situation where a metal foreign obj ect is placed in the vicinity of the power-supplying resonator, and (iii) a standby state input impedance of the power-supplying module, satisfies the following condition: the metal foreign object placement state input impedance > the standby state input impedance > the transmission state input impedance.

With the above structure, the wireless power transmission apparatus is designed to satisfy the condition that the metal foreign object placement state input impedance > the standby state input impedance > the transmission state input impedance, and thereby, the following relationship is satisfied: the transmission state input current value in the situation where the wireless power supply is performed between the power-supplying module and the power-receiving module > the standby state input current value in the situation where the wireless power supply is not performed between the power-supplying module and the power-receiving module and where the power-supplying module is in the standby state for power transmission > the metal foreign object placement state input current value in the situation where the metal foreign object is placed in the vicinity of the power-supplying resonator of the power-supplying module. Further, the threshold value is set to a value between the transmission state input current value and the standby state input current value.

In this case, the metal foreign object placement state input current value detected in the situation where the metal foreign object is placed in the vicinity of the power-supplying resonator of the power-supplying module is smaller than the threshold value. Thus, this state is treated as equivalent to the state where the wireless power supply is not performed between the power-supplying module and the power-receiving module and the power-supplying module is in the standby state for power transmission.

Thereby, when in the wireless power transmission apparatus, the shifting from the situation where the wireless power supply is performed to the situation where the metal foreign object is placed in the vicinity of the power-supplying resonator of the power-supplying module, power supply to the power-supplying module is turned off (stopped). This prevents problems such as heat generation and generation of eddy currents caused by the power supply performed in the situation where the metal foreign object is placed in the vicinity of the power-supplying resonator. Advantageous Effects of Invention

There is provided a wireless power transmission apparatus capable of preventing generation of excessive heat in a power-supplying module by a setting to make higher the input impedance of the power-supplying module with a metal foreign object in the situation where the metal foreign object is placed in the vicinity of the power-supplying module.

## Brief Description of Drawings

[FIG. 1] FIG. 1 is an explanatory diagram of a charger and a wireless headset in which a wireless power transmission apparatus of an embodiment is mounted.

[FIG. 2] FIG. 2 is a diagram showing a structure of the wireless power transmission apparatus of the embodiment.

[FIG. 3] FIG. 3 is an explanatory diagram illustrating the wireless power transmission apparatus of the embodiment, in the form of an equivalent circuit.

[FIG. 4] FIG. 4 is an explanatory diagram illustrating a transmission characteristic S21 between resonators having two peaks.

[FIG. 5] FIG. 5 is an explanatory diagram of the wireless power transmission apparatus connected to a network analyzer.

[FIG. 6] FIG. 6 is a magnetic field vector diagram in an antiphase resonance mode.

[FIG. 7] FIG. 7 is a magnetic field vector diagram in an inphase resonance mode.

[FIG. 8] FIG. 8 is an explanatory diagram illustrating the transmission characteristic S21 having a single-hump characteristic.

[FIG. 9] FIG. 9 is an explanatory diagram illustrating an equivalent circuit of the wireless power transmission apparatus in a normal charging state.

[FIG. 10] FIG. 10 is an explanatory diagram illustrating an equivalent circuit of a power-supplying module in a standby state.

[FIG. 11] FIG. 11 is an explanatory diagram illustrating an equivalent circuit of the power-supplying module with a metal foreign object in an abnormal state.

[FIG. 12A] FIG. 12A is a graphical representation showing measurement results of Measurement Experiment 1.

[FIG. 12B] FIG. 12B is a graphical representation showing measurement results of Measurement Experiment 1.

[FIG. 13A] FIG. 13A is a graphical representation showing measurement results of Measurement Experiment 2.

[FIG. 13B] FIG. 13B is a graphical representation showing measurement results of Measurement Experiment 2.

[FIG. 14A] FIG. 14A is a graphical representation showing measurement results of Measurement Experiment 3.

[FIG. 14B] FIG. 14B is a graphical representation showing measurement results of Measurement Experiment 3.

[FIG. 15A] FIG. 15A is a graphical representation showing measurement results of Measurement Experiment 4.

[FIG. 15B] FIG. 15B is a graphical representation showing measurement results of Measurement Experiment 4.

[FIG. 16] FIG. 16 is a table showing measurement results of Measurement Experiment 5.

[FIG. 17] FIG. 17 is a diagram showing a structure of a wireless power transmission apparatus of Alternative Embodiment 2.

[FIG. 18] FIG. 18 is a flowchart illustrating a power supply ON/OFF control in Alternative Embodiment 2.

Description of Embodiments

The following describes a wireless power transmission apparatus 1 of the present invention, which is used for wireless power transmission.

(Embodiment)

The wireless power transmission apparatus 1 is configured to form a magnetic field space G1 having a lower magnetic field strength than that of its surroundings (details thereof will be described later), and the apparatus 1 includes, as essential components, a power-supplying module 2 including a power-supplying resonator 22, and a power-receiving module 3 including a power-receiving resonator 32. As shown in FIG. 1 and FIG. 2, in this embodiment, a charger 101 having the power-supplying module 2 mounted therein and a wireless headset 102 having the power-receiving module 3 mounted therein will be described, as an example of the wireless power transmission apparatus 1. FIG. 1 illustrates the charger 101 and the wireless headset 102 at the time of charging.

(Structures of Charger 101 and Wireless Headset 102)

As shown in FIG. 1 and FIG. 2, the charger 101 includes the power-supplying module 2 having a power-supplying coil 21 and the power-supplying resonator 22. The wireless headset 102 includes: an earphone speaker unit 102a; and the power-receiving module 3 having a power-receiving coil 31 and the power-receiving resonator 32. The power-supplying coil 21 of the power-supplying module 2 is connected to an AC power source 6 having an oscillation circuit with the power-source frequency of the power to be supplied to the power-supplying module 2 set to a predetermined value. The power-receiving coil 31 of the power-receiving module 3 is connected to a secondary battery 9 via a stabilizer circuit 7 configured to rectify AC power received and a charging circuit 8 configured to prevent overcharge. The stabilizer circuit 7, the charging circuit 8, and the secondary battery 9 are disposed on an inner circumference side of (radially inside) the power-receiving resonator 32. (For the sake of convenience, some of the drawings illustrate the stabilizer circuit 7, the charging circuit 8, and the secondary battery 9 outside the power-receiving resonator 32.) On the inner circumference side of the power-receiving resonator 32, where the stabilizer circuit 7, the charging circuit 8, and the secondary battery 9 are disposed, a magnetic field space G1 having a lower magnetic field strength than that of its surroundings is formed during charging, which will be detailed later. Further, as shown in FIG. 1 and FIG. 2, the stabilizer circuit 7, the charging circuit 8, and the secondary battery 9 of the present embodiment constitute a power-supplied device 10 which is the final destination of the supplied power. The power-supplied device 10 is used to collectively indicate the devices of the final destination to which the power-receiving module 3 is connected.

The charger 101 has a not-shown accommodation groove for accommodating the wireless headset 102, which has a shape corresponding to the shape of the wireless headset 102. When the wireless headset 102 is accommodated in the accommodation groove of the charger 101, the wireless headset 102 is positioned in such a manner that the power-supplying module 2 of the charger 101 and the power-receiving module 3 of the wireless headset 102 face each other.

The power-supplying coil 21 plays a role of supplying power obtained from the AC power source 6 to the power-supplying resonator 22 by means of electromagnetic induction. As shown in FIG. 3, the power-supplying coil 21 is constituted by an RLC circuit whose elements include a resistor $R_1$, a coil $L_1$, and a capacitor $C_1$. As the coil $L_1$, a solenoid coil is used. The total impedance of a circuit element constituting the power-supplying coil 21 is $Z_1$. In the present embodiment, the $Z_1$ is the total impedance of the RLC circuit (circuit element) constituting the power-supplying coil 21, which includes the resistor $R_1$, the coil $L_1$, and the capacitor $C_1$. Further, the current that flows in the power-supplying coil 21 is $I_1$. Although the present embodiment deals with the RLC circuit as an example of the power-supplying coil 21, the power-supplying coil 21 may be constituted by an RL circuit.

The power-receiving coil 31 plays roles of receiving the power having been transmitted as a magnetic field energy from the power-supplying resonator 22 to the power-receiving resonator 32, by means of electromagnetic induction, and supplying the power received to the secondary battery 9 via the stabilizer circuit 7 and the charging circuit 8. As shown in FIG. 3, the power-receiving coil 31, similarly to the power-supplying coil 21, is constituted by an RLC circuit whose elements include a resistor $R_4$, a coil L4, and a capacitor $C_4$. As the coil $L_4$, a solenoid coil is used. The total impedance of a circuit element constituting the power-receiving coil 31 is $Z_4$. In the present embodiment, the $Z_4$ is the total impedance of the RLC circuit (circuit element) constituting the power-receiving coil 31, which includes the resistor $R_4$, the coil $L_4$, and the capacitor $C_4$. The total impedance of the power-supplied device 10 (the stabilizer circuit 7, the charging circuit 8, and the secondary battery 9) connected to the power-receiving coil 31 is $Z_L$. Further, the current that flows in the power-receiving coil 31 is $I_4$. However, as shown in FIG. 3, the total load impedance of the power-supplied device 10 (the stabilizer circuit 7, the charging circuit 8, and the secondary battery 9) connected to the power-receiving coil 31 is implemented in the form of a resistor $R_L$ (corresponding to $Z_L$) for the sake of convenience. Although the present embodiment deals with the RLC circuit as an example of the power-receiving coil 31, the power-receiving coil 31 may be constituted by an RL circuit.

As shown in FIG. 3, the power-supplying resonator 22 is constituted by an RLC circuit whose elements include a resistor $R_2$, a coil $L_2$, and a capacitor $C_2$. Further, as shown in FIG. 3, the power-receiving resonator 32 is constituted by an RLC circuit whose elements include a resistor $R_3$, a coil $L_3$, and a capacitor $C_3$. The power-supplying resonator 22 and the power-receiving resonator 32 each serves as a resonance circuit and plays a role of creating a magnetic field resonant state. The magnetic field resonant state (resonance phenomenon) here is a phenomenon in which two or more coils resonate with each other in a resonance frequency band. The total impedance of a circuit element constituting the power-supplying resonator 22 is $Z_2$. In the present embodiment, the $Z_2$ is the total impedance of the RLC circuit (circuit element) constituting the power-supplying resonator 22, which includes the resistor $R_2$, the coil $L_2$, and the capacitor $C_2$. The total impedance of a circuit element constituting the power-receiving resonator 32 is $Z_3$. In the present embodiment, the $Z_3$ is the total impedance of the RLC circuit (circuit element) constituting the power-receiving resonator 32, which includes the resistor $R_3$, the coil $L_3$, and the capacitor $C_3$. Further, the current that flows in the power-supplying resonator 22 is $I_2$, and the current that flows in the power-receiving resonator 32 is $I_3$.

In the RLC circuit which is the resonance circuit in each of the power-supplying resonator 22 and the power-receiving resonator 32, the resonance frequency is f0 which is derived from (Formula 1) below, where the inductance is L and the capacity of capacitor is C.

[Equation 1]

$$f = \frac{1}{2\pi\sqrt{LC}} \quad \text{...(Formula 1)}$$

As each of the power-supplying resonator 22 and the power-receiving resonator 32, a solenoid coil is used. The resonance frequency of the power-supplying resonator 22 and that of the power-receiving resonator 32 are matched with each other. Each of the power-supplying resonator 22 and the power-receiving resonator 32 may be a spiral coil or a solenoid coil as long as it is a resonator using a coil.

The distance between the power-supplying coil 21 and the power-supplying resonator 22 is d12, the distance between the power-supplying resonator 22 and the power-receiving resonator 32 is d23, and the distance between the power-receiving resonator 32 and the power-receiving coil 31 is d34 (see FIG. 5).

Further, as shown in FIG. 3, a mutual inductance between the coil $L_1$ of the power-supplying coil 21 and the coil $L_2$ of the power-supplying resonator 22 is $M_{12}$, a mutual inductance between the coil $L_2$ of the power-supplying resonator 22 and the coil $L_3$ of the power-receiving resonator 32 is $M_{23}$, and a mutual inductance between the coil $L_3$ of the power-receiving resonator 32 and the coil $L_4$ of the power-receiving coil 31 is $M_{34}$. Further, in the power-supplying module 2 and the power-receiving module 3, a coupling coefficient between the coil $L_1$ and the coil $L_2$ is denoted as $K_{12}$, a coupling coefficient between the coil $L_2$ and the coil $L_3$ is denoted as $K_{23}$, and a coupling coefficient between the coil $L_3$ and the coil $L_4$ is denoted as $K_{34}$.

With the wireless power transmission apparatus 1 (the power-supplying module 2 and the power-receiving module 3), a magnetic field resonant state (resonance phenomenon) is created between the power-supplying resonator 22 and the power-receiving resonator 32. The magnetic field resonant state created by having the power-supplying resonator 22 and the power-receiving resonator 32 resonate with each other enables power to be transmitted from the power-supplying resonator 22 to the power-receiving resonator 32 as magnetic field energy. Thus, the power is transmitted wirelessly from the charger 101 having the power-supplying module 2 to the wireless headset 102 having the power-receiving module 3, and the secondary battery 9 provided in the wireless headset 102 is charged.

(Formation of Magnetic Field Space)

In the wireless power transmission apparatus 1 of the present embodiment, a magnetic field space G1 or G2 with weakened magnetic field strength is formed to decrease the strength of the magnetic field generated inside or around the power-supplying module 2 and the power-receiving module 3. Specifically as shown in FIG. 1 to FIG. 5, when power is supplied from the power-supplying resonator 22 of the power-supplying module 2 to the power-receiving resonator 32 of the power-receiving module 3 by utilizing the resonance phenomenon, the magnetic field space G1 or G2 having a lower magnetic field strength than that of its surroundings is formed in the vicinity of the power-supplying resonator 22 and the power-receiving resonator 32.

To form the magnetic field space G1, G2, setting is made so that: a graphical representation showing a transmission characteristic "S21" between the power-supplying resonator 22 and the power-receiving resonator 32 relative to the power-source frequency has two peak portions; and the power-source frequency of the power supplied to the power-supplying module is within a frequency band corresponding to either one of the two peak portions. In the present embodiment, to form the magnetic field space G1 between the power-supplying resonator 22 and the power-receiving resonator 32 as shown in FIG. 1 to FIG. 5, the power-source frequency is set to a frequency within the frequency band corresponding to a higher peak portion which is formed on the higher frequency side between the two peak portions. If, it is desired to form the magnetic field space G2 outside the power-supplying resonator 22 and the power-receiving resonator 32 (see FIG. 5), the power-source frequency is set to a frequency within the frequency band corresponding to a lower peak portion which is formed on the lower frequency side between the two peak portions.

The transmission characteristic "S21" is formed of signals measured by a network analyzer 110 (e.g., E5061B produced by Agilent Technologies, Inc., see FIG. 5) connected to the wireless power transmission apparatus 1 (the power-supplying module 2 and the power-receiving module 3), and is indicated in decibel. The greater the value is, the higher the power transmission efficiency is. Further, the power transmission efficiency means a ratio of the power output to an input terminal 112 to the power supplied from an output terminal 111 to the power-supplying module 2 , while the wireless power transmission apparatus 1 is connected to the network analyzer 110.

Specifically, as shown in FIG. 5, using the network analyzer 110, the transmission characteristic "S21" between the power-supplying resonator 22 and the power-receiving resonator 32 relative to the power-source frequency is analyzed for various power-source frequencies of the AC power supplied to the power-supplying resonator 22. In this regard, as shown in the graphical representation of FIG. 4, the horizontal axis indicates the power-source frequency of the AC power output from the output terminal 111, and the vertical axis indicates the transmission characteristic "S21". Now, in measurement for the transmission characteristic "S21" between the power-supplying resonator 22 and the power-receiving resonator 32, if coupling between the power-supplying coil 21 and the power-supplying resonator 22 is strong, it influences the coupling state between the power-supplying resonator 22 and the power-receiving resonator 32, which makes it impossible to accurately perform measurement for the transmission characteristic "S21" between the power-supplying resonator 22 and the power-receiving resonator 32. Therefore, the distance d12 between the power-supplying coil 21 and the power-supplying resonator 22 has to be kept so that: the power-supplying resonator 22 is fully excited; a magnetic field is generated by the power-supplying resonator 22; and the coupling between the power-supplying coil 21 and the power-supplying resonator 22 is as weak as possible. For the same reason, the distance d34 between the power-receiving resonator 32 and the power-receiving coil 31 has to be kept so that: the power-receiving resonator 32 is fully excited; a magnetic field is generated by the power-receiving resonator 32 ; and the coupling between the power-receiving resonator 32 and the power-receiving coil 31 is as weak as possible. Further, setting is made so that the analyzed waveform obtained by analyzing the transmission characteristic "S21" between the power-supplying resonator 22 and the power-receiving resonator 32 has the two peak portions as shown in FIG. 4: the lower peak portion (f (Low P)) formed on the lower frequency side; and the higher peak portion (f (High P)) formed on the higher frequency side (see a solid line 150).

The above-described analyzed waveform of the transmission characteristic "S21" between the power-supplying resonator 22 and the power-receiving resonator 32 having the two separate peak portions respectively on the lower frequency side and the higher frequency side is realized by: adjusting the distance d23 between the power-supplying resonator 22 and the power-receiving resonator 32; and/or adjusting variable parameters constituting the power-supplying resonator 22 and the power-receiving resonator 32. Such variable parameters include: the resistance value, inductance, capacity of capacitor, and coupling coefficients $K_{23}$ in the $R_2$, $L_2$, and $C_2$ of the RLC circuit of the power-supplying resonator 22, and the $R_3$, $L_3$, and $C_3$ of the RLC circuit of the power-receiving resonator 32.

When, on an assumption that the analyzed waveform of the transmission characteristic "S21" between the power-supplying resonator 22 and the power-receiving resonator 32 has the two peak portions, the power-source frequency of the AC power supplied is set to the higher peak portion (f (High P)) formed on the higher frequency side, the power-supplying resonator 22 and the power-receiving resonator 32 are resonant with each other in antiphase, and the current (22A) in the power-supplying resonator 22 and the current (32A) in the power-receiving resonator 32 flow in directions opposite to each other, as shown in FIG. 6. As a result, as the magnetic field vector diagram in FIG. 6 shows, because the magnetic field generated on the inner circumference side of the power-supplying resonator 22 and the magnetic field generated on the inner circumference side of the power-receiving resonator 32 cancel each other out, the magnetic field space G1 having a lower magnetic field strength than that in positions not on the inner circumference side of the power-supplying resonator 22 and the power-receiving resonator 32 (e.g. , the magnetic field strength on the outer circumference side of the power-supplying resonator 22 and the power-receiving resonator 32) is formed on the inner circumference side of the power-supplying resonator 22 and the power-receiving resonator 32, as the influence of the magnetic fields is reduced. Note that the resonance state in which the current in the power-supplying resonator 22 and the current in the power-receiving resonator 32 flow in directions opposite to each other is referred to as an antiphase resonance mode.

Meanwhile, when, on the assumption that the analyzed waveform of the transmission characteristic "S21" between the power-supplying resonator 22 and the power-receiving resonator 32 has the two peak portions, the power-source frequency of the AC power supplied is set to the lower peak portion (f (Low P)) formed on the lower frequency side, the power-supplying resonator 22 and the power-receiving resonator 32 are resonant with each other in inphase, and the current (22A) in the power-supplying resonator 22 and the current (32A) in the power-receiving resonator 32 flow in the same direction, as shown in FIG. 7. As a result, as shown in the magnetic field vector diagram in FIG. 7 , because the magnetic field generated on the outer circumference side of the power-supplying resonator 22 and the magnetic field generated on the outer circumference side of the power-receiving resonator 32 cancel each other out, the magnetic field space G2 having a lower magnetic field strength than that in positions not on the outer circumference side of the power-supplying resonator 22 and the power-receiving resonator 32 (e.g. , the magnetic field strength on the inner circumference side of the power-supplying resonator 22 and the power-receiving resonator 32) is formed on the outer circumference side of the power-supplying resonator 22 and the power-receiving resonator 32, as the influence of the magnetic fields is reduced. Note that the resonance state in which the current in the power-supplying resonator 22 and the current in the power-receiving resonator 32 both flow in the same direction is referred to as an inphase resonance mode.

It is general to make setting in the wireless power transmission apparatus 1 in such a manner that the graphical representation showing the transmission characteristic "S21" between: the power-supplying module 2 including the power-supplying coil 21 and the power-supplying resonator 22; and the power-receiving module 3 including the power-receiving resonator 32 and the power-receiving coil 31, relative to the power-source frequency has a single-hump characteristic, as shown in FIG. 8. The single-hump characteristic means the transmission characteristic "S21" relative to the power-source frequency has a single peak which occurs in the resonance frequency band (f0) (See a solid line 151 in FIG. 8).

When the setting is made in such a manner that the transmission characteristic "S21" has the single-hump characteristic, the value of the transmission characteristic "S21" between the power-supplying module 2 and the power-receiving module 3 reaches a maximum (the power transmission efficiency is maximized) at the power-source frequency corresponding to the resonance frequency band of $f_0$, as indicated by a broken line 151 of FIG. 8. Thus, to maximize the power transmission efficiency in the wireless transmission technology, it is general to use the apparatus after making setting in such a manner that the transmission characteristic "S21" between the power-supplying module 2 and the power-receiving module 3 has the single-hump characteristic, that is, setting the power-source frequency to the resonance frequency $f_0$.

(Problems Related to Metal Foreign Object in Wireless Power Transmission Apparatus)

Description has been made for the structure of the wireless power transmission apparatus 1 and for the magnetic field space G1, G2. If, in the process of usage in wireless power transmission, a metal foreign object (such as a coin, nail, paper clip, and key) is placed between the power-supplying module 2 and the power-receiving module 3 or in the vicinity of the power-supplying module 2, the metal foreign object is influenced by the magnetic field, to induce an eddy current. If an eddy current is induced, excessive heat may occur in the metal foreign object and/or in the power-supplying module 2.

In the present invention, attention is given to the following perception: with an arrangement such that an input impedance $Z_{in}$ (A) ("Abnormality") of the power-supplying module 2 with a metal foreign obj ect in a situation where the metal foreign obj ect is in the vicinity of the power-supplying module 2 (input impedance in the abnormal state, corresponding to the metal foreign object placement state input impedance) is higher than an input impedance Zin(T) ("Transmission") of the wireless power transmission apparatus 1 in the situation where the normal charging is performed (input impedance in the normal charging state, corresponding to the transmission state input impedance) and than an input impedance $Z_{in}$ (W) (Waiting) of the power-supplying module 2 in the situation where the power-supplying module 2 is on standby for power transmission (input impedance in the standby state, corresponding to the standby state input impedance), the current value at a given voltage is lowered, and thereby power consumption in the power-supplying module is reduced and excessive heat occurring in the power-supplying module 2 and in the metal foreign object is prevented.

In the broad sense, the input impedance $Z_{in}$ (W) (input impedance in the standby state, the standby state input impedance) and the input impedance $Z_{in}$ (A) (input impedance in the abnormal state, the metal foreign object placement state input impedance) are included in a non-transmission state input impedance, which is the input impedance when no wireless power supply is performed.

Now, in the wireless power transmission apparatus 1, the following input impedances were measured under various conditions: the input impedance $Z_{in}$ (A) of the power-supplying module 2 with a metal foreign object in the situation where the metal foreign object is in the vicinity of the power-supplying module 2; the input impedance Zin(T) of the wireless power transmission apparatus 1 in the situation where normal charging is performed; and the input impedance $Z_{in}$ (W) of the power-supplying module 2 in the situation where the power-supplying module 2 is on standby for power transmission. Then, a relationship among these impedances was analyzed.

(Measurement Experiment)

In the wireless power transmission apparatus 1 used in Measurement Experiments 1 to 4, the power-supplying coil 21 is constituted by an RLC circuit whose elements include a resistor $R_1$, a coil $L_1$, and a capacitor $C_1$. For the coil $L_1$, copper wire material having a wire diameter of 0.14 mm is used, and the coil diameter is 11 mmϕ. The power-supplying resonator 22 is constituted by an RLC circuit whose elements include a resistor $R_2$, a coil $L_2$, and a capacitor $C_2$. For the coil $L_2$, copper wire material having a wire diameter of 0.2 mm is used, and adopted is a solenoid coil with its coil diameter of 11 mmϕ. Further, the power-receiving resonator 32 is constituted by an RLC circuit whose elements include a resistor $R_3$, a coil $L_3$, and a capacitor $C_3$. For the coil $L_3$, copper wire material having a wire diameter of 0.1 mm is used, and adopted is a solenoid coil with its coil diameter of 8 mmϕ. The power-receiving coil 31 is constituted by an RLC circuit whose elements include a resistor $R_4$, a coil $L_4$, and a capacitor $C_4$. For the coil $L_4$, copper wire material having a wire diameter of 0.1 mm is used, and the coil diameter is 8 mmϕ. Furthermore, on the inner circumference side of the power-supplying coil 21 and the power-supplying resonator 22, a cylindrical magnetic member having a thickness of 300 μm was disposed to further weaken the magnetic field strength of the to-be-formed magnetic field space G1. In the same way, on the inner circumference side of power-receiving resonator 32 and the power-receiving coil 31, a cylindrical magnetic member having a thickness of 300 μm was disposed. The values of $R_1$, $R_2$, $R_3$, and $R_4$ in the wireless power transmission apparatus 1 used in Measurement Experiments 1 to 4 were set to 1.5 Ω, 2.6 Q, 2.1 Ω, and 0.6 Ω, respectively. Further, the values of $L_1$, $L_2$, $L_3$, and $L_4$ were set to 13 μH, 18 μH, 7 μH, and 2.5 μH. Further, the values of $C_1$, $C_2$, $C_3$, and $C_4$ were set to 2 nF, 1.4 nF, 3.6 nF, and 10 nF, respectively. The resonance frequency between the power-supplying resonator 22 and the power-receiving resonator 32 was 1 MHz. The coupling coefficient $k_{12}$ was 0.32, the coupling coefficient $k_{23}$ was 0.15, and the coupling coefficient $k_{34}$ was 0.93.

In Measurement Experiments 1 to 4, the input impedances were measured using an impedance analyzer (in this embodiment, E5061B produced by Agilent Technologies, Inc.). Specifically, measured were: the input impedance Zin(T) of the wireless power transmission apparatus 1 in the situation where normal wireless transmission is performed (as shown in FIG. 9); the input impedance $Z_{in}$ (W) of the power-supplying module 2 in the situation where the power-supplying module 2 is on standby for wireless power transmission (as shown in FIG. 10) ; and the input impedance $Z_{in}$ (A) of the power-supplying module 2 with the metal foreign object in the situation where the metal foreign object is in the vicinity of the power-supplying module 2 (as shown in FIG. 11). In Measurement Experiments 1 to 4, the input impedances were measured for various types of metal foreign objects (aluminum, copper, and iron pieces and air batteries (nickel, aluminum)) It should be noted that in Measurement Experiments 1 to 4, a 100 Ω resistor ($R_L$) was used in place of the stabilizer circuit 7, the charging circuit 8, and the secondary battery 9. The input impedance $Z_{in}$ (A) of the power-supplying module 2 with the metal foreign object was measured under the conditions that: the distance d23 between the power-supplying resonator 22 and the metal foreign object 60 shown in FIG. 11 is 3 mm; and the distance d23 is 2 mm.

(Measurement Experiment 1)

In Measurement Experiment 1, measured were: the input impedance $Z_{in}$ (T), the input impedance $Z_{in}$ (W), and the input impedances $Z_{in}$ (A) for circular aluminum pieces A and B as the metal foreign object 60 under the conditions that: the distance d23 between the power-supplying resonator 22 and the metal foreign object 60 is 3 mm and the distance d23 is 2 mm. The aluminum piece A has a diameter of 12 mmφ and a thickness of 0.5 mm, while the aluminum piece B has a diameter of 9 mmφ and a thickness of 0.5 mm. The measurement results are shown in FIG. 12A and FIG. 12B.

Referring to the measurement results (aluminum piece A, d23 = 3 mm) of FIG. 12A and FIG. 12B, when the power-source frequency is set to the resonance frequency $f_0$, the relationship among the measured input impedances is as follows: the input impedance $Z_{in}$ (W) > the input impedance $Z_{in}$ (A) (aluminum piece A) > the input impedance $Z_{in}$ (T). This shows that, the input impedance $Z_{in}$ is low in the normal charging state, and therefore the current value in the wireless power transmission apparatus 1 at a given voltage is high and power is transmitted efficiently. Meanwhile, the input impedance $Z_{in}$ (A) (aluminum piece A) is lower than the input impedance $Z_{in}$ (W). This means that the current value at the given voltage is larger in the situation where the aluminum piece A is placed in the vicinity of the power-supplying module 2 than in the standby state. That is, when the aluminum piece A is placed in the vicinity of the power-supplying module 2, heat generated in the power-supplying module 2 and in the metal foreign object 60 is larger than in the standby state.

In the meantime, when the power-source frequency is set to a frequency higher than the resonance frequency $f_0$ (e.g., f(A) in FIG. 12A and FIG. 12B), the relationship among the measured input impedances is as follows: the input

impedance $Z_{in}$ (A) (aluminum piece A) > the input impedance $Z_{in}$ (W) > the input impedance $Z_{in}$ (T). This shows that, the input impedance $Z_{in}$ is the lowest in the normal charging state, and therefore the current value in the wireless power transmission apparatus 1 at a given voltage is high and power is transmitted efficiently. Meanwhile, the input impedance $Z_{in}$ (A) (aluminum piece A) is higher than the input impedance $Z_{in}$ (W). This means that the current value at the given voltage is smaller in the situation where the aluminum piece A is placed in the vicinity of the power-supplying module 2 than in the standby state. That is, when the aluminum piece A is placed in the vicinity of the power-supplying module 2, heat generated in the power-supplying module 2 and in the metal foreign object 60 is smaller than in the standby state.

According to the above measurement results, when the power-source frequency is set to a frequency higher than the resonance frequency $f_0$, the input impedance $Z_{in}$ (A) of the power-supplying module 2 with the metal foreign object 60 in the situation where the metal foreign object 60 (aluminum piece A) is in the vicinity of the power-supplying module 2 may be higher than the input impedance Zin(T) and than the input impedance $Z_{in}$ (W). The results shows that, in the above case, the current value at a given voltage is lower than in the standby state, and thereby power consumption in the power-supplying module is reduced and excessive heat generation in the power-supplying module 2 and in the metal foreign object is prevented.

As described above, when the power-source frequency is set to the resonance frequency $f_0$, the input impedance $Z_{in}$ (A) (aluminum piece A) is lower than the input impedance $Z_{in}$ (W), and thus, the current value at a given voltage is larger in the situation where the aluminum piece A is placed in the vicinity of the power-supplying module 2 than in the standby state. However, when the power-source frequency is set to a frequency higher than the resonance frequency $f_0$, there is a case where the input impedance $Z_{in}$ (A) (aluminum piece A) is higher than the input impedance $Z_{in}$ (W). In this case, the current value at the given voltage is smaller in the situation where the aluminum piece A is placed in the vicinity of the power-supplying module 2 than in the standby state. It is presumed that, this is because, when the aluminum piece A is placed in the vicinity of the power-supplying module 2, the peak value of the input impedance $Z_{in}$ (A) relative to the power-source frequency shifts to the higher frequency side with respect to the peak value of the input impedance Zin(W), as shown in FIG. 12A and FIG. 12B.

The above tendency was also observed under the condition that the aluminum piece B is used as the metal foreign object 60, and under the condition that the distance d23 between the power-supplying resonator 22 and the metal foreign object 60 is 2 mm, as shown in FIG. 12A and FIG. 12B.

(Measurement Experiment 2)

In Measurement Experiment 2, measured were: the input impedance $Z_{in}$ (T), the input impedance $Z_{in}$ (W), and the input impedances $Z_{in}$ (A) for circular copper pieces A and B as the metal foreign object 60 under the conditions that: the distance d23 between the power-supplying resonator 22 and the metal foreign object 60 is 3 mm and the distance d23 is 2 mm. The copper piece A has a diameter of 12 mmφ and a thickness of 0.5 mm, while the copper piece B has a diameter of 9 mmφ and a thickness of 0.5 mm. The measurement results are shown in FIG. 13A and FIG. 13B.

Referring to the measurement results (copper piece A, d23 = 3 mm) of FIG. 13A and FIG. 13B, when the power-source frequency is set to the resonance frequency $f_0$, the relationship among the measured input impedances is as follows: the input impedance $Z_{in}$ (W) > the input impedance $Z_{in}$ (A) (copper piece A) > the input impedance $Z_{in}$ (T). This shows that, the input impedance $Z_{in}$ is the lowest in the normal charging state, and therefore the current value in the wireless power transmission apparatus 1 at a given voltage is high and power is transmitted efficiently. Meanwhile, the input impedance $Z_{in}$ (A) (copper piece A) is lower than the input impedance Zin(W). This means that the current value at the given voltage is larger in the situation where the copper piece A is placed in the vicinity of the power-supplying module 2 than in the standby state. That is, when the copper piece A is placed in the vicinity of the power-supplying module 2, heat generated in the power-supplying module 2 and in the metal foreign object 60 is larger than in the standby state.

In the meantime, when the power-source frequency is set to a frequency higher than the resonance frequency $f_0$ (e.g., f(A) in FIG. 13A and FIG. 13B), the relationship among the measured input impedances is as follows: the input impedance $Z_{in}$ (A) (copper piece A) > the input impedance $Z_{in}$ (W) > the input impedance $Z_{in}$ (T). This shows that, the input impedance $Z_{in}$ is the lowest in the normal charging state, and therefore the current value in the wireless power transmission apparatus 1 at a given voltage is high and power is transmitted efficiently. Meanwhile, the input impedance $Z_{in}$ (A) (copper piece A) is higher than the input impedance $Z_{in}$ (W). This means that the current value at the given voltage is smaller in the situation where the copper piece A is placed in the vicinity of the power-supplying module 2 than in the standby state. That is, when the copper piece A is placed in the vicinity of the power-supplying module 2, heat generated in the power-supplying module 2 and in the metal foreign object 60 is smaller than in the standby state.

The above tendency was also observed under the condition that the copper piece B is used as the metal foreign object 60, and under the condition that the distance d23 between the power-supplying resonator 22 and the metal foreign object 60 is 2 mm, as shown in FIG. 13A and FIG. 13B. The results of the Measurement Experiment 2 had the tendency similar to that in the Measurement Experiment 1.

(Measurement Experiment 3)

In Measurement Experiment 3, measured were: the input impedance $Z_{in}$ (T), the input impedance $Z_{in}$ (W), and the input impedances $Z_{in}$ (A) for circular iron pieces A and B as the metal foreign object 60 under the conditions that: the distance d23 between the power-supplying resonator 22 and the metal foreign object 60 is 3 mm and the distance d23 is 2 mm. The iron piece A has a diameter of 12 mmφ and a thickness of 0.5 mm, while the iron piece B has a diameter of 9 mmφ and a thickness of 0.5 mm. The measurement results are shown in FIG. 14A and FIG. 14B.

Referring to the measurement results (iron piece A, d23 = 3 mm) of FIG. 14A and FIG. 14B, when the power-source frequency is set to the resonance frequency $f_0$, the relationship among the measured input impedances is as follows: the input impedance $Z_{in}$ (W) > the input impedance $Z_{in}$ (A) (iron piece A) > the input impedance $Z_{in}$ (T). This shows that, the input impedance $Z_{in}$ is the lowest in the normal charging state, and therefore the current value in the wireless power transmission apparatus 1 at a given voltage is high and power is transmitted efficiently. Meanwhile, the input impedance $Z_{in}$ (A) (iron piece A) is lower than the input impedance $Z_{in}$ (W). This means that the current value at the given voltage is larger in the situation where the iron piece A is placed in the vicinity of the power-supplying module 2 than in the standby state. That is, when the iron piece A is placed in the vicinity of the power-supplying module 2, heat generated in the power-supplying module 2 and in the metal foreign object 60 is larger than in the standby state.

In the meantime, when the power-source frequency is set to a frequency higher than the resonance frequency $f_0$ (e.g., f(A) in FIG. 14A and FIG. 14B), the relationship among the measured input impedances is as follows: the input impedance $Z_{in}$ (A) (iron piece A) > the input impedance $Z_{in}$ (W) > the input impedance $Z_{in}$ (T). This shows that, the input impedance $Z_{in}$ is the lowest in the normal charging state, and therefore the current value in the wireless power transmission apparatus 1 at a given voltage is high and power is transmitted efficiently. Meanwhile, the input impedance $Z_{in}$ (A) (iron piece A) is higher than the input impedance Zin(W). This means that the current value at the given voltage is smaller in the situation where the iron piece A is placed in the vicinity of the power-supplying module 2 than in the standby state. That is, when the iron piece A is placed in the vicinity of the power-supplying module 2, heat generated in the power-supplying module 2 and in the metal foreign object 60 is smaller than in the standby state.

The above tendency was also observed under the condition that the iron piece B is used as the metal foreign object 60, and under the condition that the distance d23 between the power-supplying resonator 22 and the metal foreign object 60 is 2 mm, as shown in FIG. 14A and FIG. 14B. The results of the Measurement Experiment 3 also had the tendency similar to that in the Measurement Experiment 1.

(Measurement Experiment 4)

In Measurement Experiment 4, measured were the input impedance $Z_{in}$ (T), the input impedance $Z_{in}$ (W), and the input impedances $Z_{in}$ (A) for cylindrical air batteries A and B as the metal foreign object 60 under the conditions that: the distance d23 between the power-supplying resonator 22 and the metal foreign object 60 is 3 mm and the distance d23 is 2 mm. The air battery A has a diameter of 11.6 mmφ and a thickness of 5.4 mm; while the air battery B has a diameter of 7.9 mmφ and a thickness of 5.4 mm. The measurement results are shown in FIG. 15A and FIG. 15B.

Referring to the measurement results (air battery A, d23 = 3 mm) of FIG. 15A and FIG. 15B, when the power-source frequency is set to the resonance frequency $f_0$, the relationship among the measured input impedances is as follows: the input impedance $Z_{in}$ (W) > the input impedance $Z_{in}$ (A) (air battery A) > the input impedance Zin(T) . This shows that, the input impedance $Z_{in}$ is the lowest in the normal charging state, and therefore the current value in the wireless power transmission apparatus 1 at a given voltage is high and power is transmitted efficiently. Meanwhile, the input impedance $Z_{in}$ (A) (air battery A) is lower than the input impedance Zin(W). This means that the current value at the given voltage is larger in the situation where the air battery A is placed in the vicinity of the power-supplying module 2 than in the standby state. That is, when the air battery A is placed in the vicinity of the power-supplying module 2, heat generated in the power-supplying module 2 and in the metal foreign object 60 is larger than in the standby state.

In the meantime, when the power-source frequency is set to a frequency higher than the resonance frequency $f_0$ (e.g., f(A) in FIG. 15A and FIG. 15B), the relationship among the measured input impedances is as follows: the input impedance $Z_{in}$ (A) (air battery A) > the input impedance $Z_{in}$ (W) > the input impedance Zin(T) . This shows that, the input impedance $Z_{in}$ is the lowest in the normal charging state, and therefore the current value in the wireless power transmission apparatus 1 at a given voltage is high and power is transmitted efficiently. Meanwhile, the input impedance $Z_{in}$ (A) (air battery A) is higher than the input impedance $Z_{in}$ (W). This means that the current value at the given voltage is smaller in the situation where the air battery A is placed in the vicinity of the power-supplying module 2 than in the standby state. That is, when the air battery A is placed in the vicinity of the power-supplying module 2, heat generated in the power-supplying module 2 and in the metal foreign object 60 is smaller than in the standby state.

The above tendency was also observed under the condition that the air battery B is used as the metal foreign object 60, and under the condition that the distance d23 between the power-supplying resonator 22 and the metal foreign object 60 is 2 mm, as shown in 15A and FIG. 15B. The results of the Measurement Experiment 4 also had the tendency similar to that in the Measurement Experiment 1.

(Design Formulae of Input Impedances $Z_{in}$ (A), Zin(W), and $Z_{in}$ (T)) The above-described Measurement Experiments 1 to 4 show that, when the metal foreign object 60 is placed in the vicinity of the power-supplying module 2, the peak value of the input impedance $Z_{in}$ (A) relative to the power-source frequency shifts to the higher frequency side with respect to the peak value of the input impedance $Zi_n$ (W), as shown in FIG. 12 to FIG. 15. Thus, when the power-source frequency is set to a frequency higher than the resonance frequency $f_0$, there is a case where the input impedance $Z_{in}$ (A) is higher than the input impedance Zin(W). In this case, the current value at a given voltage is smaller in the situation where the metal foreign object 60 is placed in the vicinity of the power-supplying module 2 than in the standby state.

In view of the above characteristic, the apparatus is designed so that when the power-source frequency is set to a frequency higher than the resonance frequency $f_0$, the relationship among the measured input impedances $Z_{in}$ relative to the set power-source frequency satisfies the following condition: the input impedance $Z_{in}$ (A) > the input impedance $Z_{in}$ (W) > the input impedance $Z_{in}$ (T).

To be more specific, to obtain the input impedance $Z_{in}$ (T) in the normal charging state, the structure of the wireless power transmission apparatus 1 including the power-supplied device 10 is expressed in the form of an equivalent circuit, which is shown in FIG. 9. Based on the equivalent circuit in FIG. 9, the input impedance $Z_{in}$ (T) is expressed as (Formula 2).

[Equation 2]

$$Z_{in}(T) = Z_1 + \cfrac{(\omega M_{12})^2}{Z_2 + \cfrac{(\omega M_{23})^2}{Z_3 + \cfrac{(\omega M_{34})^2}{Z_4 + Z_L}}}$$

$$M_{12} = k_{12}\sqrt{L_1 L_2} \qquad M_{23} = k_{23}\sqrt{L_2 L_3} \qquad M_{34} = k_{34}\sqrt{L_3 L_4}$$

($K_{ij}$ is coupling coefficient between $L_i$ and $L_j$)

...(Formula 2)

Further, the impedance $Z_1$, $Z_2$, $Z_3$, $Z_4$, and $Z_L$ of the power-supplying coil 21, the power-supplying resonator 22, the power-receiving resonator 32, and the power-receiving coil 31 in the wireless power transmission apparatus 1 of the present embodiment are expressed as (Formula 3).

[Equation 3]

$$Z_1 = R_1 + j\left(\omega L_1 - \frac{1}{\omega C_1}\right)$$

$$Z_2 = R_2 + j\left(\omega L_2 - \frac{1}{\omega C_2}\right)$$

$$Z_3 = R_3 + j\left(\omega L_3 - \frac{1}{\omega C_3}\right)$$

$$Z_4 = R_4 + j\left(\omega L_4 - \frac{1}{\omega C_4}\right)$$

$$Z_L = R_L$$

...(Formula 3)

Introducing (Formula 3) into (Formula 2) makes (Formula 4).
[Equation 4]

$$Z_{in}(T) = R_1 + j\left(\omega L_1 - \frac{1}{\omega C_1}\right) + \cfrac{(\omega M_{12})^2}{R_2 + j\left(\omega L_2 - \frac{1}{\omega C_2}\right) + \cfrac{(\omega M_{23})^2}{R_3 + j\left(\omega L_3 - \frac{1}{\omega C_3}\right) + \cfrac{(\omega M_{34})^2}{R_4 + j\left(\omega L_4 - \frac{1}{\omega C_4}\right) + R_L}}}$$

...(Formula 4)

To obtain the input impedance $Z_{in}$ (W) in the standby state, the structure of the power-supplying module 2 is expressed in the form of an equivalent circuit, which is shown in FIG. 10. Based on the equivalent circuit in FIG. 10, the input impedance $Z_{in}$ (W) is expressed as (Formula 5).
[Equation 5]

$$Z_{in}(W)=\left[R_1+\frac{(\omega M_{12})^2 R_2}{R_2^2+\left(\omega L_2-\frac{1}{\omega C_2}\right)^2}\right]+j\left[\omega L_1-\frac{1}{\omega C_1}-\frac{(\omega M_{12})^2\left(\omega L_2-\frac{1}{\omega C_2}\right)}{R_2^2+\left(\omega L_2-\frac{1}{\omega C_2}\right)^2}\right]$$

...(Formula 5)

To obtain the input impedance $Z_{in}$ (A) of the power-supplying module 2 with the metal foreign object 60 in the situation where the metal foreign object 60 is in the vicinity of the power-supplying module 2, the structure of the power-supplying module 2 with the metal foreign object 60 is expressed in the form of an equivalent circuit, which is shown in FIG. 11. Here, the metal foreign object 60 is regarded as an RL circuit whose elements include a resistor $R_m$ and a coil $L_m$ (the mutual inductance between the coil $L_2$ of the power-supplying resonator 22 and the coil $L_m$ of the metal foreign object 60 is denoted by $M_{2m}$, and the coupling coefficient between the coil $L_2$ and the coil $L_m$ is denoted by $k_{2m}$). Based on the equivalent circuit in FIG. 11, the input impedance $Z_{in}$ (A) is expressed as (Formula 6).

[Equation 6]

$$Zin(A)=\left(R_1+\frac{(\omega M_{12})^2\left(R_2+\frac{(\omega M_{2m})^2 R_m}{R_m^2+(\omega L_m)^2}\right)}{\left(R_2+\frac{(\omega M_{2m})^2 R_m}{R_m^2+(\omega L_m)^2}\right)^2+\left(\omega L_2-\frac{1}{\omega C_2}-\frac{(\omega M_{2m})^2\omega L_m}{R_m^2+(\omega L_m)^2}\right)^2}\right)$$
$$+j\left(\omega L_1-\frac{1}{\omega C_1}-\frac{(\omega M_{12})^2\left(\omega L_2-\frac{1}{\omega C_2}-\frac{(\omega M_{2m})^2\omega L_m}{R_m^2+(\omega L_m)^2}\right)}{\left(R_2+\frac{(\omega M_{2m})^2 R_m}{R_m^2+(\omega L_m)^2}\right)^2+\left(\omega L_2-\frac{1}{\omega C_2}-\frac{(\omega M_{2m})^2\omega L_m}{R_m^2+(\omega L_m)^2}\right)^2}\right)$$

...(Formula 6)

In view of the above, the apparatus is designed so that when the power-source frequency is set to a frequency higher than the resonance frequency $f_0$, the relationship among the measured input impedances $Z_{in}$ relative to the set power-source frequency satisfies the following condition: the input impedance $Z_{in}$ (A) > the input impedance $Z_{in}$ (W) > the input impedance $Z_{in}$ (T), based on (Formulae 4 to 6) expressed based on the equivalent circuits.

To design the apparatus so that the relationship satisfies the condition that the input impedance $Z_{in}$ (A) > the input impedance $Z_{in}$ (W) > the input impedance Zin(T) on the basis of the (Formulae 4 to 6) expressed based on the equivalent circuits, the resistance value, inductance, capacity of capacitor, mutual inductance, and coupling coefficients $K_{12}$, $K_{23}$, and $K_{34}$ in the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, the $R_4$, $L_4$, and $C_4$ of the RLC circuit of the power-receiving coil 31 are used as parameters variable at the stage of designing and manufacturing.

(Measurement Experiment 5)

The foregoing has described that when the power-source frequency is set to a frequency higher than the resonance frequency $f_0$, there is a case where the input impedance $Z_{in}$ (A) is higher than the input impedance $Z_{in}$ (W). As described above, in the present invention, when power is supplied from the power-supplying resonator 22 of the power-supplying module 2 to the power-receiving resonator 32 of the power-receiving module 3 by utilizing the resonance phenomenon, it is possible to form the magnetic field space G1 or G2 having a lower magnetic field strength than that of its surroundings in the vicinity of the power-supplying resonator 22 and the power-receiving resonator 32. To form the magnetic field space G1, G2, setting is made so that: the graphical representation showing the transmission characteristic "S21" between the power-supplying resonator 22 and the power-receiving resonator 32 relative to the power-source frequency has two peak portions; and the power-source frequency of the power supplied to the power-supplying module 2 is within a frequency band corresponding to either one of the two peak portions. In the present embodiment, to form the magnetic field space G1 between the power-supplying resonator 22 and the power-receiving resonator 32 as shown in FIG. 1 to FIG. 5, the power-source frequency is set to a frequency within the frequency band corresponding to the higher peak portion which is formed on the higher frequency side between the two peak portions.

Thus, when the power-source frequency is set to the frequency within the frequency band corresponding to the higher peak portion (f (High P)) which is formed on the higher frequency side between the two peak portions to form the magnetic field space G1, the input impedance $Z_{in}$ (A) is higher than the input impedance $Z_{in}$ (W) as shown in FIG. 12 to FIG. 15 which shows the measurement results of Measurement Experiments 1 to 4.

In Measurement Experiment 5, the power-source frequency was actually set to a frequency within the frequency band corresponding to the higher peak portion (f (High P)) formed on the higher frequency side between the two peak portions, to form the magnetic field space G1, and the following input impedances were measured: the input impedance $Z_{in}$ (T) of the wireless power transmission apparatus 1 in the normal charging state; the input impedance $Z_{in}$ (W) of the power-supplying module 2 in the standby state; and the input impedance $Z_{in}$ (A) of the power-supplying module 2 with the metal foreign object 60 in the situation where the metal foreign object 60 is placed in the vicinity of the power-supplying module 2.

To be more specific, the wireless power transmission apparatus 1 used in Measurement Experiments 1 to 4 was used. As the power-supplied device 10 connected to the power-receiving coil 31, the stabilizer circuit 7, the charging circuit 8, and the secondary battery 9 were used. The applied voltage was 5 V. The power-source frequency was set to 1030 kHz (f (High P)), and the charging current of the secondary battery 9 was 12.5 mA. As the metal foreign object 60, used were aluminum, copper, and iron pieces and air batteries (nickel, aluminum), as same as in Measurement Experiments 1 to 4. Measurement in the normal charging state was performed under the condition that the distance d23 between the power-supplying resonator 22 and the power-receiving resonator 32 is 3 mm. Measurement of the current value in the power-supplying module 2 with the metal foreign object was performed under the conditions that: the distance d23 between the power-supplying resonator 22 and the metal foreign object 60 shown in FIG. 11 is 3 mm and the distance d23 is 2 mm. The measurement results are shown in FIG. 16.

As shown in FIG. 16, under the conditions that: the power-source frequency was 1030 kHz (f (High P)) ; and the distance d23 between the power-supplying resonator 22 and the metal foreign object 60 was 3 mm, the input impedance $Z_{in}$ (W) was 84.1 Ω, the input impedance $Z_{in}$ (A) (aluminum piece A) was 117.3 Q, the input impedance $Z_{in}$ (A) (aluminum piece B) was 96.8 Ω, the input impedance $Z_{in}$ (A) (copper piece A) was 121.0 Ω, the input impedance $Z_{in}$ (A) (copper piece B) was 96.8 Ω, the input impedance $Z_{in}$ (A) (iron piece A) was 92.2 Ω, the input impedance $Z_{in}$ (A) (iron piece B) was 88.0 Ω, the input impedance $Z_{in}$ (A) (air battery A) was 94.4 Ω, the input impedance $Z_{in}$ (A) (air battery B) was 86.0 Ω, and the input impedance Zin(T) was 69.1 Ω.

Further, under the conditions that: the power-source frequency was 1030 kHz (f (High P)); and the distance d23 between the power-supplying resonator 22 and the metal foreign object 60 was 3 mm, the input impedance $Z_{in}$ (W) was 84.1 Ω, the input impedance $Z_{in}$(A) (aluminum piece A) was 168.3 Q, the input impedance $Z_{in}$ (A) (aluminum piece B) was 110.6 Q, the input impedance $Z_{in}$ (A) (copper piece A) was 162.6 Ω, the input impedance $Z_{in}$ (A) (copper piece B) was 110.6 Ω, the input impedance $Z_{in}$ (A) (iron piece A) was 101.9 Ω, the input impedance $Z_{in}$ (A) (iron piece B) was 90.0 Ω, the input impedance $Z_{in}$ (A) (air battery A) was 101.9 Ω, the input impedance $Z_{in}$ (A) (air battery B) was 88.0 Ω, and the input impedance Zin(T) was 58.6 Ω.

As seen from the above, whichever of the aluminum, copper and iron pieces and the air batteries is used as the metal foreign object 60, the relationship among the measured input impedances is the input impedance $Z_{in}$ (A) > the input impedance $Z_{in}$ (W) > the input impedance $Z_{in}$ (T).

Thus, when the power-source frequency is set to a frequency within the frequency band corresponding to the higher peak portion (f (High P)) formed on the higher frequency side between the two peak portions to form the magnetic field space G1, and when the relationship of the input impedance $Z_{in}$ (A) > the input impedance $Z_{in}$ (W) > the input impedance $Z_{in}$ (T) is satisfied, the current value in the wireless power transmission apparatus 1 in the normal charging state > the current value in the power-supplying module 2 in the standby state > the current value in the power-supplying module 2 with the metal foreign object 60 in the situation where the metal foreign object 60 is placed in the vicinity of the power-supplying module 2. That is, heat generated in the power-supplying module 2 and in the metal foreign object 60 is smaller in the situation where the metal foreign object 60 is placed in the vicinity of the power-supplying module 2, than in the standby state and than in the normal charging state.

(Advantageous Effects)

With the above structure, the power-source frequency of power supplied to the power-supplying module 2 is set to a frequency within the frequency band corresponding to the higher peak portion (f (High P)) which is formed on the higher frequency side between the two peak portions of the transmission characteristic; and the wireless power transmission apparatus 1 is designed to satisfy the condition that the input impedance $Z_{in}$ (A) in the metal foreign object placement state > the input impedance $Z_{in}$(W) in the standby state > the input impedance Zin(T) in the normal charging state. Thereby, the input impedance $Z_{in}$ (A) is higher than the input impedance $Z_{in}$ (W) and the input impedance $Z_{in}$(T) even though the metal foreign object 60 is placed in the vicinity of the power-supplying resonator 22 included in the power-supplying module 2. With this, the current value in the power-supplying module 2 with the metal foreign object 60 is lower than that in the standby state, and thus heat generation and generation of eddy currents are reduced.

Further, because the wireless power transmission apparatus 1 is arranged to have the circuit configuration satisfying above (Formulae 4 to 6), the input impedance $Z_{in}$ (A) is higher than the input impedance $Z_{in}$(W) and the input impedance Zin(T) even though the metal foreign object 60 is placed in the vicinity of the power-supplying resonator 22 included in the power-supplying module 2. With this, the current value in the power-supplying module 2 is lower than that in the standby state, and thus heat generation and generation of eddy currents are reduced.

(Alternative Embodiment 1)

In the above embodiment, a control device (control unit) or the like is not provided. That is, the power-source frequency is set to a frequency higher than the resonance frequency $f_0$, thereby to make the input impedance $Z_{in}$ (A) in the situation where the metal foreign object 60 is placed in the vicinity of the power-supplying module 2 higher than the input impedance $Z_{in}$ (W) in the standby state, and thus to make the current value at a given voltage is smaller. With this, excessive heat generation in the power-supplying module 2 and in the metal foreign object 60 is prevented.

The present disclosure is not limited to this configuration. The wireless power transmission apparatus 1 may further include: a detector configured to detect an input impedance; and a control unit configured to determine that the metal foreign object 60 is placed in the vicinity of the power-supplying resonator 22 when the input impedance detected by the detector is higher than the input impedance $Z_{in}$ (W).

To be more specific, the range of the input impedance $Z_{in}$(W) in the situation where charging is not performed from the charger 101 to the secondary battery 9 of the wireless headset 102 (in the standby state) is predetermined by measurement (for example, the range of the input impedance $Z_{in}$ (W) in the standby state is referably stored in a storage device included in the control unit), and when the input impedance $Z_{in}$ detected by the detector falls within the range of the input impedance $Z_{in}$ (W), it is determined that the apparatus is in the standby state for charging. Meanwhile, when the input impedance $Z_{in}$ detected by the detector is higher than the impedances in the range of the input impedance $Z_{in}$ (W) in the standby state, it is determined that the metal foreign object 60 is placed in the vicinity of the power-supplying resonator 22.

Further, the control unit may be configured to make control so as to stop the power supply to the power-supplying module 2 when it is determined that the metal foreign object 60 is placed in the vicinity of the power-supplying resonator 22.

Furthermore, the wireless power transmission apparatus 1 may further include a reporting device (such as an alarm, a lamp, and a display), and the control unit may be configured to control the reporting device to report that the metal foreign object 60 is placed in the vicinity of the power-supplying resonator 22 when it is determined that the metal foreign object 60 is placed in the vicinity of the power-supplying resonator 22. For example, if an alarm is employed as the reporting device, an anomaly is reported by warning sound. If an LED lamp is employed, the anomaly is reported by turning on and/or blinking the lamp in a warning color. If a display is employed, the anomaly is reported by displaying a warning message on the display.

With the above structure, it is determined that the metal foreign object 60 is placed in the vicinity of the power-supplying resonator 22 when the input impedance detected by the detector is higher than the input impedance $Z_{in}$ (W). Thus, safe power supply is realized.

Further, when the control unit determines that the metal foreign object 60 is placed in the vicinity of the power-supplying resonator 22, the power supply to the power-supplying module 2 is stopped. This prevents problems such as heat generation and generation of eddy currents caused by the power supply performed in the situation where the metal foreign object 60 is placed in the vicinity of the power-supplying resonator 22.

Furthermore, when the control unit determines that the metal foreign object 60 is placed in the vicinity of the power-supplying resonator 22, the control unit controls the reporting device to report that the metal foreign object 60 is placed in the vicinity of the power-supplying resonator 22.

(Alternative Embodiment 2)

There has been described that, in the wireless power transmission apparatus 1, when the relationship of the input impedance $Z_{in}$ (A) > the input impedance $Z_{in}$ (W) > the input impedance $Z_{in}$ (T) is satisfied, the relationship among the current values are as follows: the current value in the wireless power transmission apparatus 1 in the normal charging state > the current value in the power-supplying module 2 in the standby state > the current value in the power-supplying module 2 with the metal foreign object 60 in the situation where the metal foreign object 60 is placed in the vicinity of the power-supplying module 2. Now, utilizing the relationship among the current values, the present invention may be configured to be able to control the start and stop of the power supply (control turning on/off the power supply) to the power-supplying module 2.

Specifically, as shown in FIG. 17, the wireless power transmission apparatus 1 includes a power source circuit 5 connected between the power-supplying coil 21 of the power-supplying module 2 and the AC/DC power source 20. The power source circuit 5 includes an output oscillator 11, a current detector 12, and a comparator circuit 13.

The output oscillator 11 is constituted by: an oscillator (e.g. , an inverter circuit) configured to set the power-source frequency of power to a predetermined value; and a switching circuit configured to turn on and off the power supply to the power-supplying module 2 upon reception of a control signal from the outside (an ON control signal and an OFF control signal, which will be described later); and the like.

The current detector 12 is configured to detect a current value output from the output oscillator 11 to the power-supplying module 2. In this embodiment, the current value is obtained by measuring voltage.

The comparator circuit 13 is a comparator configured to: compare a first current value detected by the current detector 12 with a predetermined threshold value; when it is determined that the first current value is not smaller than the threshold value, compare, with the threshold value, a second current value detected by the current detector 12 for the second time after a predetermined time passes; and when it is determined that the second current value is smaller than the threshold value, output the OFF control signal to the output oscillator 11 to turn off the power supply to the power-supplying module 2.

Note that, the threshold value is set to a value between (i) the current value input to the power-supplying module 2 in the situation where the wireless power supply is performed from the power-supplying module 2 to the power-receiving module 3 and (ii) the current value input to the power-supplying module 2 in the situation where the wireless power supply is not performed from the power-supplying module 2 to the power-receiving module 3.

To be more specific, as described above, since the relationship of the input impedance $Z_{in}$ (A) with the metal foreign object placed > the input impedance $Z_{in}$ (W) in the standby state > the input impedance $Z_{in}$(T) in the normal charging state is satisfied, the following relationship is satisfied: the current value in the situation where the wireless power supply is performed between the power-supplying module 2 and the power-receiving module 3 (the current value in the normal charging state: transmission state input current value) > the current value in the standby state (standby state input current value) > the current value in the situation where the metal foreign object is placed in the vicinity of the power-supplying resonator 22 of the power-supplying module 2 (the current value in the abnormal state: metal foreign object placement state input current value). In this embodiment, the threshold value is set to a value between the transmission state input current value and the standby state input current value. The threshold value is freely settable as long as the above condition is satisfied.

(Power Supply ON/OFF Control Flow)

The following describes a power supply ON/OFF control executed by the power source circuit 5, with reference to the flowchart in FIG. 18.

First of all, first detection of the current value (first current value) is performed by the current detector 12 (S11). Then, the comparator circuit 13 determines whether the thus detected first current value is not smaller than the above-mentioned threshold value (the predetermined value) (S12).

When the detected first current value is smaller than the threshold value (S12: NO), the processing goes to S11. Meanwhile, when the detected first current value is not smaller than the threshold value (S12: YES), the second detection of the current value (the second current value) is performed by the current detector 12 after a predetermined time has passed (S13).

Then, the comparator circuit 13 determines whether the thus detected second current value is smaller than the above-mentioned threshold value (S14). Then, when the detected second current value is not smaller than the threshold value (S14: NO), that is, when both of the first current value and the second current value are not smaller than the threshold value, the comparator circuit 13 outputs the ON control signal to the output oscillator 11, to turn on the power supply to the power-supplying module 2 (S15). As a result, the output oscillator 11 performs the power supply to the power-supplying module 2 (turns on the switching circuit).

Meanwhile, when the detected second current value is smaller than the threshold value (S14: YES), that is, when the current value drops from the first current value which is not smaller than the threshold value to the second current value which is smaller than the threshold value, the comparator circuit 13 outputs the OFF control signal to the output oscillator 11, to turn off the power supply to the power-supplying module 2 (S16). As a result, the output oscillator 11 stops the power supply to the power-supplying module 2 (turns off the switching circuit).

The above processing is repeated, to perform the power supply ON/OFF control.

The above wireless power transmission apparatus 1 is configured so that: by detecting a change in the current value, it is determined whether shifting occurs from the normal charging state where wireless power supply is performed normally to the standby state or to the state where a metal foreign object is placed in the vicinity of the power-supplying resonator 22, and when the above shifting occurs, the output oscillator 11 turns off the power supply to the power-supplying module 2. With this, power consumption is reduced.

Further, with the above structure, the wireless power transmission apparatus 1 is designed to satisfy the condition that the metal foreign object placement state input impedance $Z_{in}$ (A) > the standby state input impedance $Z_{in}$ (W) > the transmission state input impedance $Z_{in}$ (T), and thereby the following relationship is satisfied: the transmission state input current value in the situation where the wireless power supply is performed between the power-supplying module 2 and the power-receiving module 3 > the standby state input current value in the situation where the wireless power supply is not performed between the power-supplying module 2 and the power-receiving module 3 and where the power-supplying module 2 is in the standby state for power transmission > the metal foreign object placement state input current value in the situation where the metal foreign object 60 is placed in the vicinity of the power-supplying resonator 22 of the power-supplying module 2. Further, the threshold value is set to a value between the transmission state input current value and the standby state input current value. In this case, the metal foreign object placement state input current value detected in the situation where the metal foreign object 60 is placed in the vicinity of the power-supplying resonator 22 of the power-supplying module 2 is smaller than the threshold value. Thus, this state is treated as equivalent to the state where the wireless power supply is not performed between the power-supplying module 2 and the power-receiving module 3 and the power-supplying module 2 is in the standby state for power transmission.

Thus, when in the wireless power transmission apparatus 1, the shifting from the situation where the wireless power supply is performed to the situation where the metal foreign object 60 is placed in the vicinity of the power-supplying resonator 22 of the power-supplying module 2 , the power supply to the power-supplying module 2 is turned off (stopped). This prevents problems such as heat generation and generation of eddy currents caused by the power supply performed in the situation where the metal foreign object 60 is placed in the vicinity of the power-supplying resonator 22.

The above description deals with the wireless power transmission apparatus 1 in which the power-source frequency of the power source circuit 5 configured to control the start and stop of the power supply to the power-supplying module 2 is set to a frequency within the frequency band corresponding to the higher peak portion formed on the higher frequency side between the two peak portions of the transmission characteristic; however, the power-source frequency may be set to a frequency within a frequency band corresponding to the lower peak portion formed on the lower frequency side between the two peak portions of the transmission characteristic.

In this case, if the wireless power transmission apparatus 1 is set to have the relationship that the metal foreign object placement state input impedance $Z_{in}$ (A) < standby state input impedance $Z_{in}$ (W) < the transmission state input impedance $Z_{in}$ (T), the following relationship is held: the transmission state input current value in the situation where the wireless power supply is performed between the power-supplying module 2 and the power-receiving module 3 < the standby state input current value in the situation where the wireless power supply is not performed between the power-supplying module 2 and the power-receiving module 3 and where the power-supplying module 2 is in the standby state for power transmission < the metal foreign object placement state input current value in the situation where the metal foreign object 60 is placed in the vicinity of the power-supplying resonator 22 of the power-supplying module 2. Thus, the threshold value is set to a value between the transmission state input current value and the standby state input current value. Further, the comparator circuit 13 is set so as to: compare a first current value detected by the current detector 12 with the predetermined threshold value; when it is determined that the first current value is not larger than the threshold value, compare, with the threshold value, a second current value detected by the current detector 12 for the second time after a predetermined time passes; and when it is determined that the second current value is larger than the threshold value, output the OFF control signal to the output oscillator 11 to turn off the power supply to the power-supplying module 2.

(Alternative Embodiment 3)

Although the above description of the manufacturing method deals with the wireless headset 102 as an example, the invention is applicable to any devices having a secondary battery; e. g. , tablet PCs, digital cameras, mobile phones, earphone-type music player, hearing aids, and sound collectors.

Although the above description deals with the wireless power transmission apparatus 1 configured to perform power transmission by means of magnetic coupling using a resonance phenomenon (magnetic field resonant state) between resonators (coils) provided to a power-supplying module 2 and a power-receiving module 3, the present invention is applicable to a wireless power transmission apparatus configured to perform power transmission by using resonance and electromagnetic induction between coils of the power-supplying device and the power-receiving device.

Further, although the above description assumes the wireless power transmission apparatus 1 is mounted in a portable electronic device, the use of such an apparatus is not limited to such small devices. For example, with a modification to the specifications according to the required power amount, wireless power transmission apparatus 1 is mountable to a relatively large device such as a wireless charging system in an electronic vehicle (EV), or to an even smaller device such as a wireless endoscope for medical use.

Although the above descriptions have been provided with regard to the characteristic parts so as to understand the present invention more easily, the invention is not limited to the embodiments and the examples as described above and can be applied to the other embodiments and examples, and the applicable scope should be construed as broadly as possible. Furthermore, the terms and phraseology used in the specification have been used to correctly illustrate the present invention, not to limit it. In addition, it will be understood by those skilled in the art that the other structures, systems, methods and the like included in the spirit of the present invention can be easily derived from the spirit of the invention described in the specification. Accordingly, it should be considered that the present invention covers equivalent structures thereof without departing from the spirit and scope of the invention as defined in the following claims. In addition, it is required to sufficiently refer to the documents that have been already disclosed, so as to fully understand the objects and effects of the present invention.

Reference Signs List

1: Wireless Power Transmission Apparatus
2: Power-Supplying Module
3: Power-Receiving Module
5: Power Source Circuit
6: AC power source
7: Stabilizer Circuit
8: Charging Circuit
9: Secondary Battery
10: Power-Supplied Device
11: Output Oscillator
12: Current Detector
13: Comparator Circuit
20: AC/DC power source
21: Power-Supplying Coil
22: Power-Supplying Resonator
31: Power-Receiving Coil
32: Power-Receiving Resonator
60: Metal Foreign Object
102: Wireless Headset
101: Charger

## Claims

**1.** A wireless power transmission apparatus in which setting is made so that a transmission characteristic between a power-supplying resonator included in a power-supplying module and a power-receiving resonator included in a power-receiving module relative to a power-source frequency of power has two peak portions, the wireless power transmission apparatus configured to supply power by means of a resonance phenomenon occurring between the power-supplying module and the power-receiving module, wherein:

the power-source frequency is set to a frequency within a frequency band corresponding to a higher peak portion which is formed on a higher frequency side between the two peak portions of the transmission characteristic; and a relationship among input impedances in a setting where the power-source frequency is set to the frequency within the frequency band corresponding to the higher peak portion of the two peak portions of the transmission characteristic, which input impedances are (i) a transmission state input impedance of the wireless power transmission apparatus in a situation where the power-supplying resonator and the power-receiving resonator are disposed to oppose each other, (ii) a metal foreign object placement state input impedance of the wireless power transmission apparatus in a situation where a metal foreign object is placed in the vicinity of the power-supplying resonator, and (iii) a standby state input impedance of the power-supplying module, satisfies the following condition: the metal foreign object placement state input impedance > the standby state input impedance > the transmission state input impedance.

**2.** The wireless power transmission apparatus according to claim 1, wherein:

the power-supplying module includes at least a power-supplying coil and the power-supplying resonator;
the power-receiving module includes at least the power-receiving resonator and a power-receiving coil;
the power-supplying coil includes an RLC circuit whose elements include a resistor $R_1$, a coil $L_1$, and a capacitor $C_1$, and whose total impedance is $Z_1$;
the power-supplying resonator includes an RLC circuit whose elements include a resistor $R_2$, a coil $L_2$, and a capacitor $C_2$, and whose total impedance is $Z_2$;
the power-receiving resonator includes an RLC circuit whose elements include a resistor $R_3$, a coil $L_3$, and a capacitor $C_3$, and whose total impedance is $Z_3$;
the power-receiving coil includes an RLC circuit whose elements include a resistor $R_4$, a coil $L_4$, and a capacitor $C_4$, and whose total impedance is $Z_4$;
a total load impedance of devices to which power is supplied from the power-receiving coil is $Z_L$;
a mutual inductance between the coil $L_1$ of the power-supplying coil and the coil $L_2$ of the power-supplying resonator is $M_{12}$;
a mutual inductance between the coil $L_2$ of the power-supplying resonator and the coil $L_3$ of the power-receiving resonator is $M_{23}$;
a mutual inductance between the coil $L_3$ of the power-receiving resonator and the coil $L_4$ of the power-receiving coil is $M_{34}$,
a mutual inductance between the coil $L_2$ of the power-supplying resonator and a coil $L_m$ of the metal foreign object is $M_{2m}$;
element values of circuit elements constituting the power-supplying coil, the power-supplying resonator, the power-receiving resonator, and the power-receiving coil and the mutual inductances are used as parameters, and the metal foreign object is assumed as an RL circuit whose elements include a resistor $R_m$ and the coil $L_m$; and
the metal foreign object placement state input impedance, the standby state input impedance, and the transmission state input impedance are respectively expressed in the following design formulae.

$$\text{Metal Foreign Object Placement State Input Impedance} = \left( R_1 + \frac{(\omega M_{12})^2 \left( R_2 + \frac{(\omega M_{2m})^2 R_m}{R_m^2 + (\omega L_m)^2} \right)}{\left( R_2 + \frac{(\omega M_{2m})^2 R_m}{R_m^2 + (\omega L_m)^2} \right)^2 + \left( \omega L_2 - \frac{1}{\omega C_2} - \frac{(\omega M_{2m})^2 \omega L_m}{R_m^2 + (\omega L_m)^2} \right)^2} \right) + j\left( \omega L_1 - \frac{1}{\omega C_1} - \frac{(\omega M_{12})^2 \left( \omega L_2 - \frac{1}{\omega C_2} - \frac{(\omega M_{2m})^2 \omega L_m}{R_m^2 + (\omega L_m)^2} \right)}{\left( R_2 + \frac{(\omega M_{2m})^2 R_m}{R_m^2 + (\omega L_m)^2} \right)^2 + \left( \omega L_2 - \frac{1}{\omega C_2} - \frac{(\omega M_{2m})^2 \omega L_m}{R_m^2 + (\omega L_m)^2} \right)^2} \right)$$

$$\text{Standby State Input Impedance} = \left[ R_1 + \frac{(\omega M_{12})^2 R_2}{R_2^2 + \left( \omega L_2 - \frac{1}{\omega C_2} \right)^2} \right] + j\left[ \omega L_1 - \frac{1}{\omega C_1} - \frac{(\omega M_{12})^2 \left( \omega L_2 - \frac{1}{\omega C_2} \right)}{R_2^2 + \left( \omega L_2 - \frac{1}{\omega C_2} \right)^2} \right]$$

$$\text{Transmission State Input Impedance} = Z_1 + \cfrac{(\omega M_{12})^2}{Z_2 + \cfrac{(\omega M_{23})^2}{Z_3 + \cfrac{(\omega M_{34})^2}{Z_4 + Z_L}}}$$

3. The wireless power transmission apparatus according to claim 1, comprising:

a detector configured to detect an input impedance; and
a control unit configured to determine that the metal foreign object is placed in the vicinity of the power-supplying resonator when the input impedance detected by the detector is higher than the standby state input impedance.

4. The wireless power transmission apparatus according to claim 3, wherein the control unit is configured to stop power supply to the power-supplying module when the control unit determines that the metal foreign object is placed in the vicinity of the power-supplying resonator.

5. The wireless power transmission apparatus according to claim 3, further comprising a reporting device configured to give a report to an outside, wherein,
the control unit is configured to control the reporting device to report that the metal foreign object is placed in the vicinity of the power-supplying resonator when the control unit determines that the metal foreign object is placed in the vicinity of the power-supplying resonator.

6. A wireless power transmission apparatus in which:
a transmission characteristic between a power-supplying resonator included in a power-supplying module and a power-receiving resonator included in a power-receiving module relative to a power-source frequency of power has two peak portions; and
a relationship between input impedances in a setting where the power-source frequency is set to a frequency within a frequency band corresponding to a higher peak portion which is formed on a higher frequency side between the two peak portions of the transmission characteristic, which impedances are (i) a transmission state input impedance in a situation where wireless power supply is performed between the power-supplying module and the power-receiving module and (ii) a non-transmission state input impedance in a situation where wireless power supply is not performed, satisfies the following condition: the non-transmission state input impedance > the transmission state input impedance, the wireless power transmission apparatus comprising:

an output oscillator configured to turn on and off power supply to the power-supplying module;
a current detector configured to detect a current value input from the output oscillator to the power-supplying module; and
a comparator circuit configured to perform the following operations of (a) comparing a first current value detected by the current detector with a threshold value set to a value between (i) a current value input to the power-supplying module in the situation where wireless power supply is performed between the power-supplying module and the power-receiving module and (ii) a current value input to the power-supplying module in the situation where wireless power supply is not performed between the power-supplying module and the power-receiving module, (b) when it is determined that the first current value detected by the current detector is not smaller than the threshold value, comparing a second current value detected by the current detector for the second time with the threshold value, and (c) when it is determined that the second current value is smaller than the threshold value, outputting an OFF control signal to the output oscillator to turn off the power supply to the power-supplying module in the output oscillator.

7. The wireless power transmission apparatus according to claim 6, wherein
a relationship among input impedances in a setting where the power-source frequency is set to the frequency within the frequency band corresponding to the higher peak portion of the two peak portions of the transmission characteristic, which input impedances are (i) a transmission state input impedance of the wireless power transmission apparatus in a situation where the power-supplying resonator and the power-receiving resonator are disposed to oppose each other, (ii) a metal foreign object placement state input impedance of the wireless power transmission apparatus in a situation where a metal foreign obj ect is placed in the vicinity of the power-supplying resonator, and (iii) a standby state input impedance of the power-supplying module, satisfies the following condition: the metal foreign object placement state input impedance > the standby state input impedance > the transmission state input impedance.

FIG.1

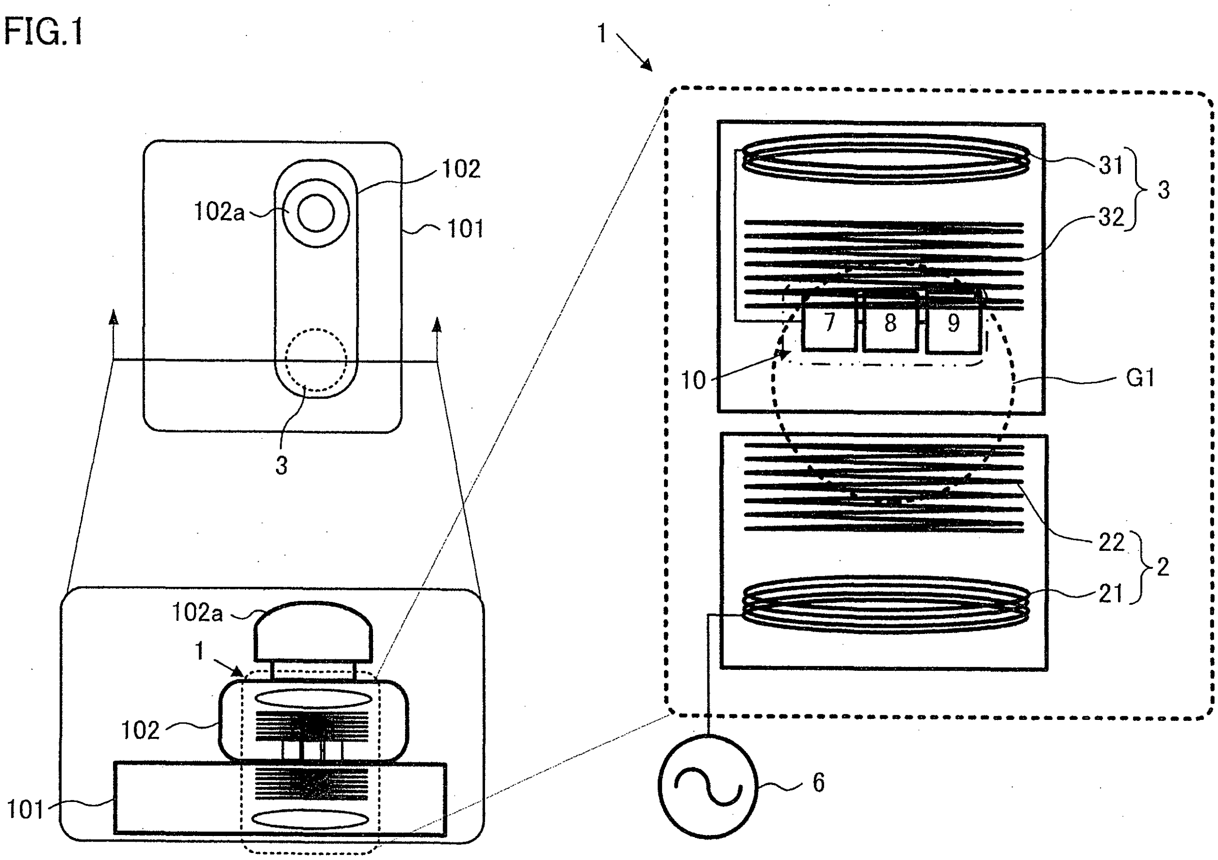

FIG.2

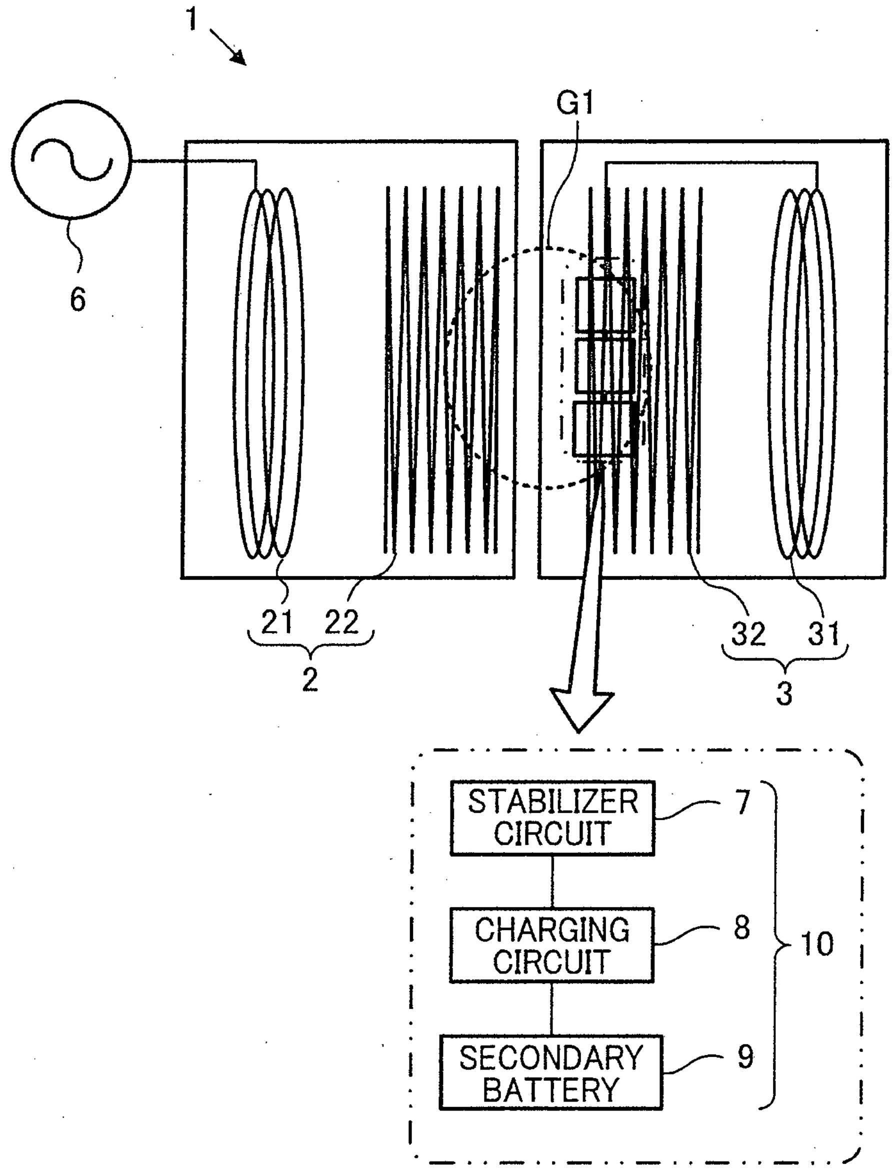
1
G1
6
21
22
2
32
31
3
STABILIZER CIRCUIT
7
CHARGING CIRCUIT
8
10
SECONDARY BATTERY
9

FIG.3

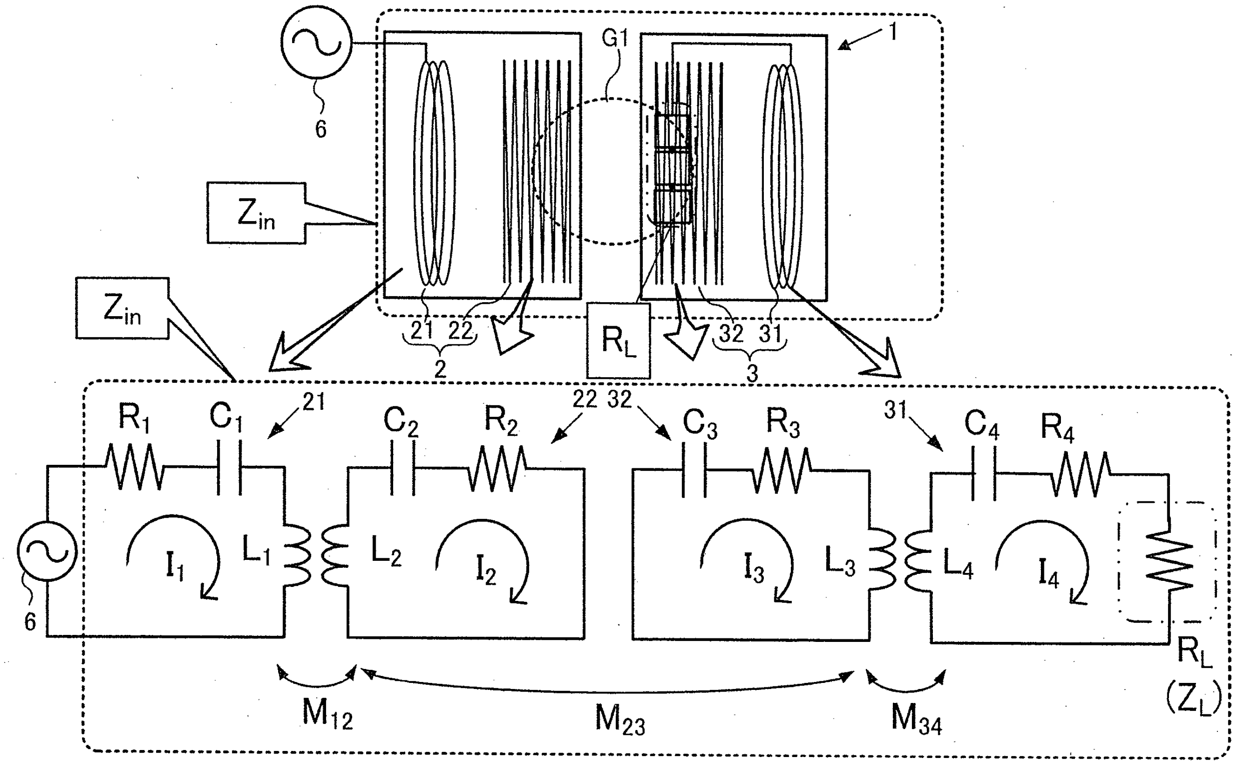
6
Zin
G1
1
21 22
2
RL
32 31
3
Zin
R1
C1
21
C2
R2
22 32
C3
R3
31
C4
R4
L1
I1
L2
I2
I3
L3
L4
I4
6
RL
(ZL)
M12
M23
M34

FIG.4

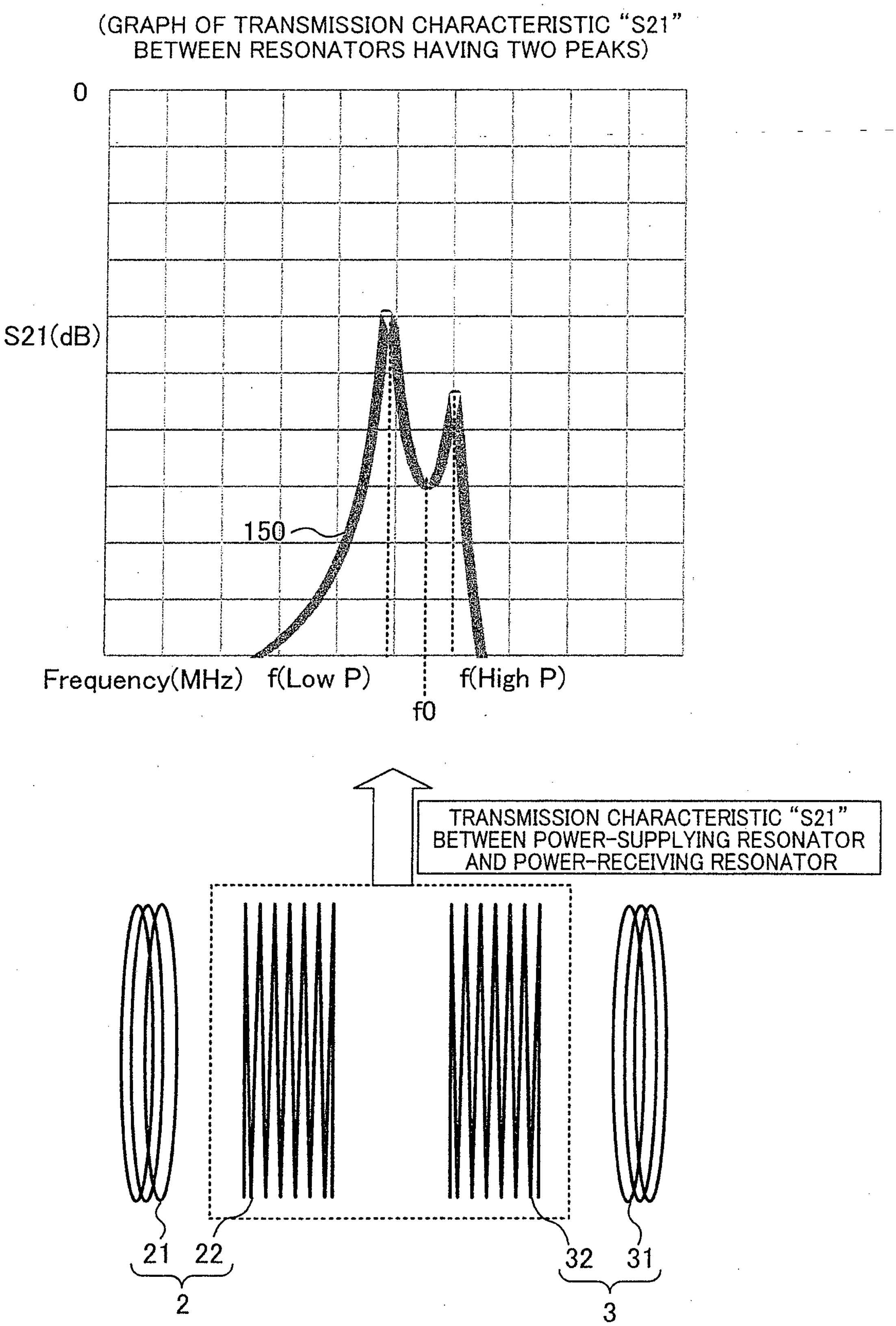
(GRAPH OF TRANSMISSION CHARACTERISTIC "S21" BETWEEN RESONATORS HAVING TWO PEAKS)
0
S21(dB)
150
Frequency(MHz)
f(Low P)
f(High P)
f0
TRANSMISSION CHARACTERISTIC "S21" BETWEEN POWER-SUPPLYING RESONATOR AND POWER-RECEIVING RESONATOR
21
22
2
32
31
3

FIG.5

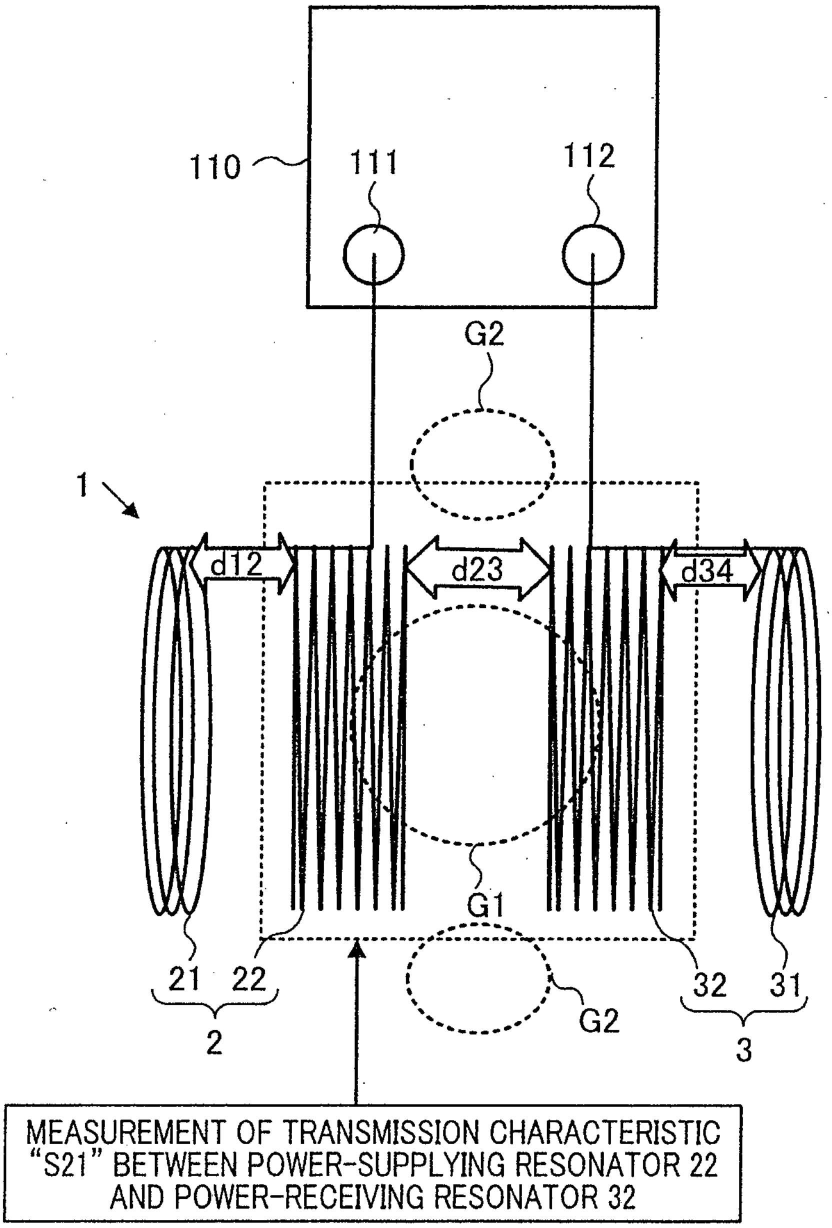
110
111
112
G2
1
d12
d23
d34
G1
21
22
G2
32
31
2
3
MEASUREMENT OF TRANSMISSION CHARACTERISTIC "S21" BETWEEN POWER-SUPPLYING RESONATOR 22 AND POWER-RECEIVING RESONATOR 32

FIG.6

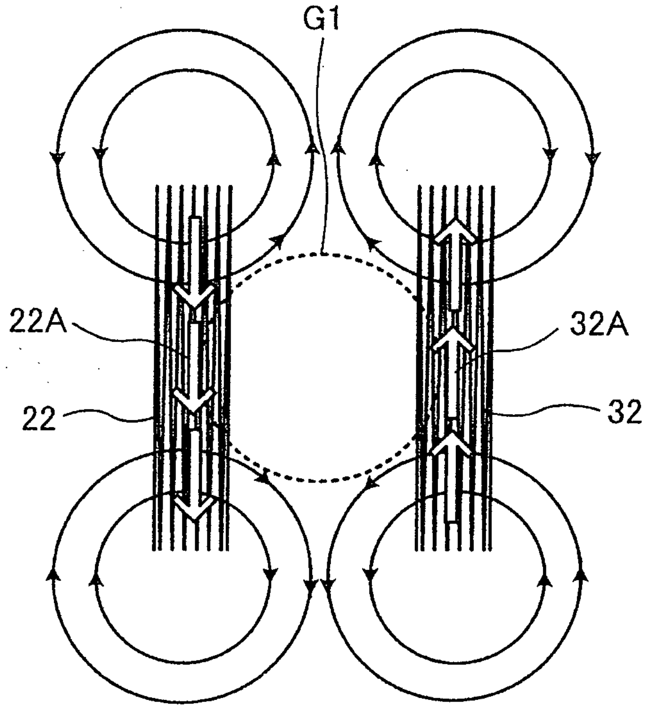

FIG.7

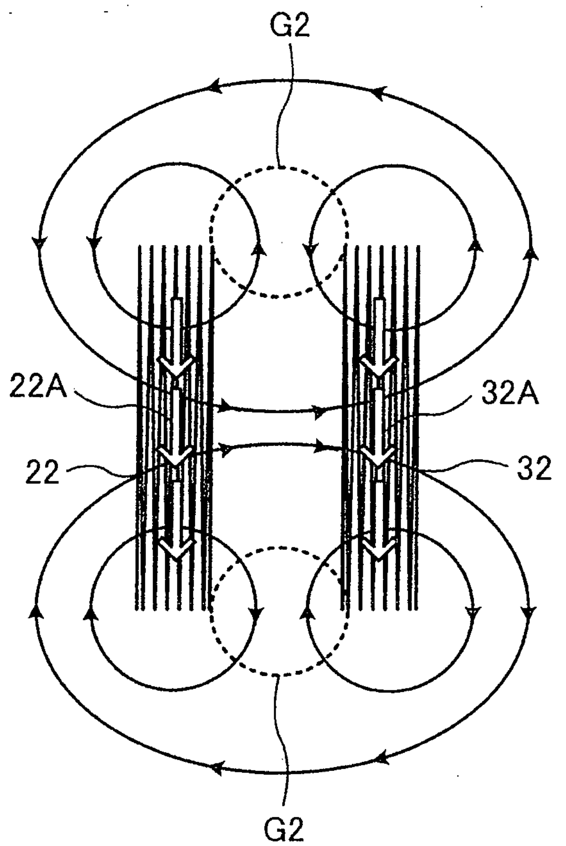

FIG.8

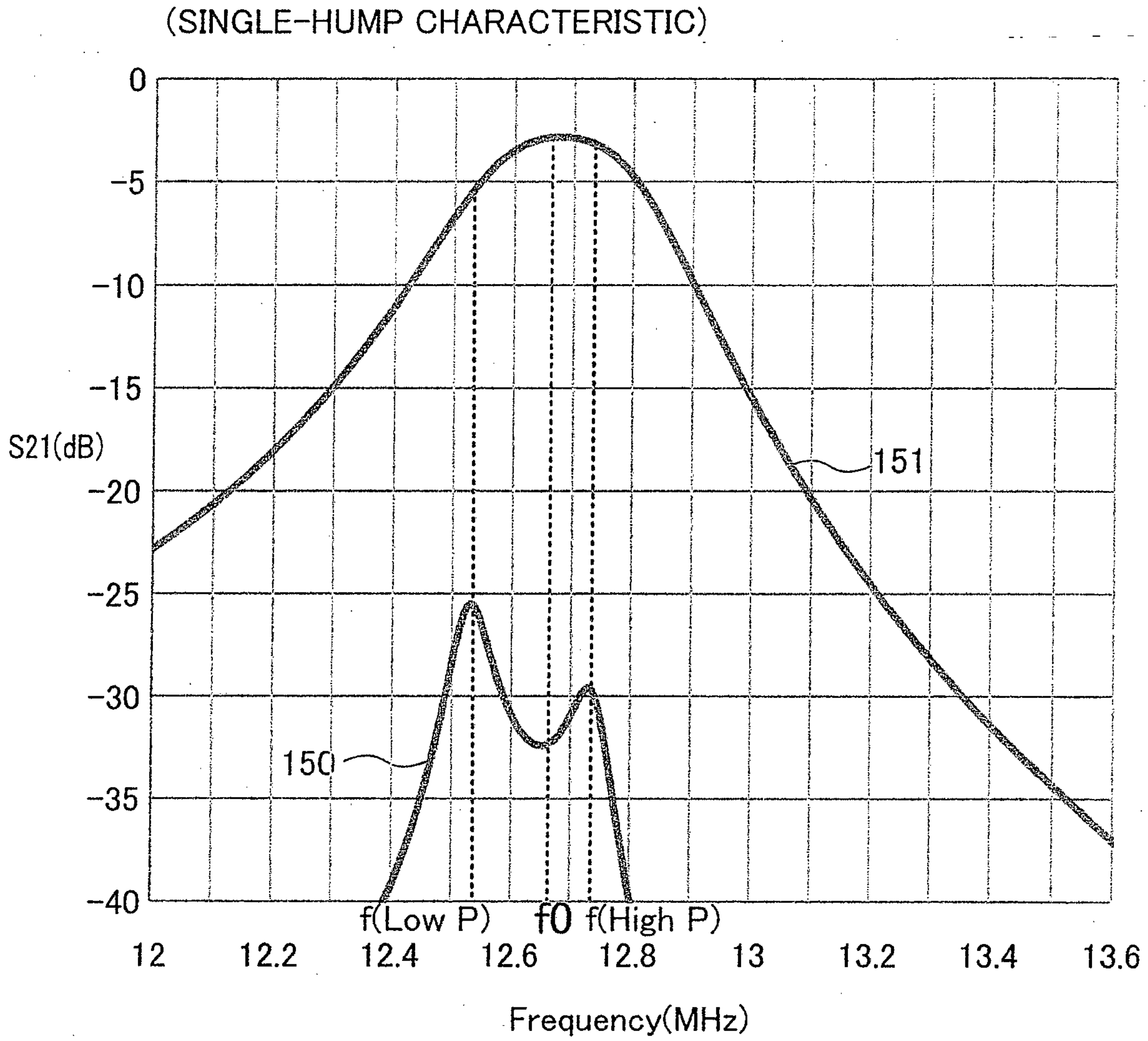
(SINGLE-HUMP CHARACTERISTIC)
0
-5
-10
-15
-20
-25
-30
-35
-40
S21(dB)
151
150
f(Low P)
f0
f(High P)
12
12.2
12.4
12.6
12.8
13
13.2
13.4
13.6
Frequency(MHz)

FIG.9

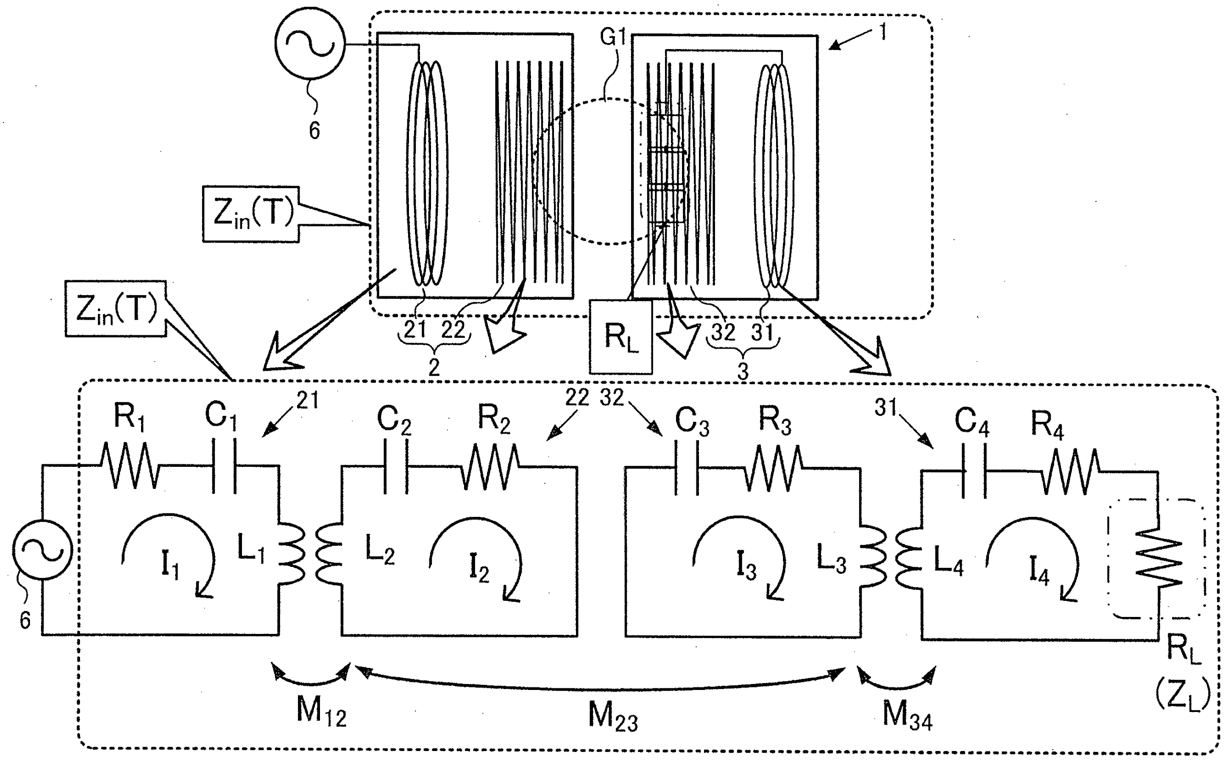
6
Zin(T)
G1
1
21 22
2
RL
32 31
3
Zin(T)
R1
C1
21
C2
R2
22 32
C3
R3
31
C4
R4
I1
L1
L2
I2
I3
L3
L4
I4
6
M12
M23
M34
RL
(ZL)

FIG.10

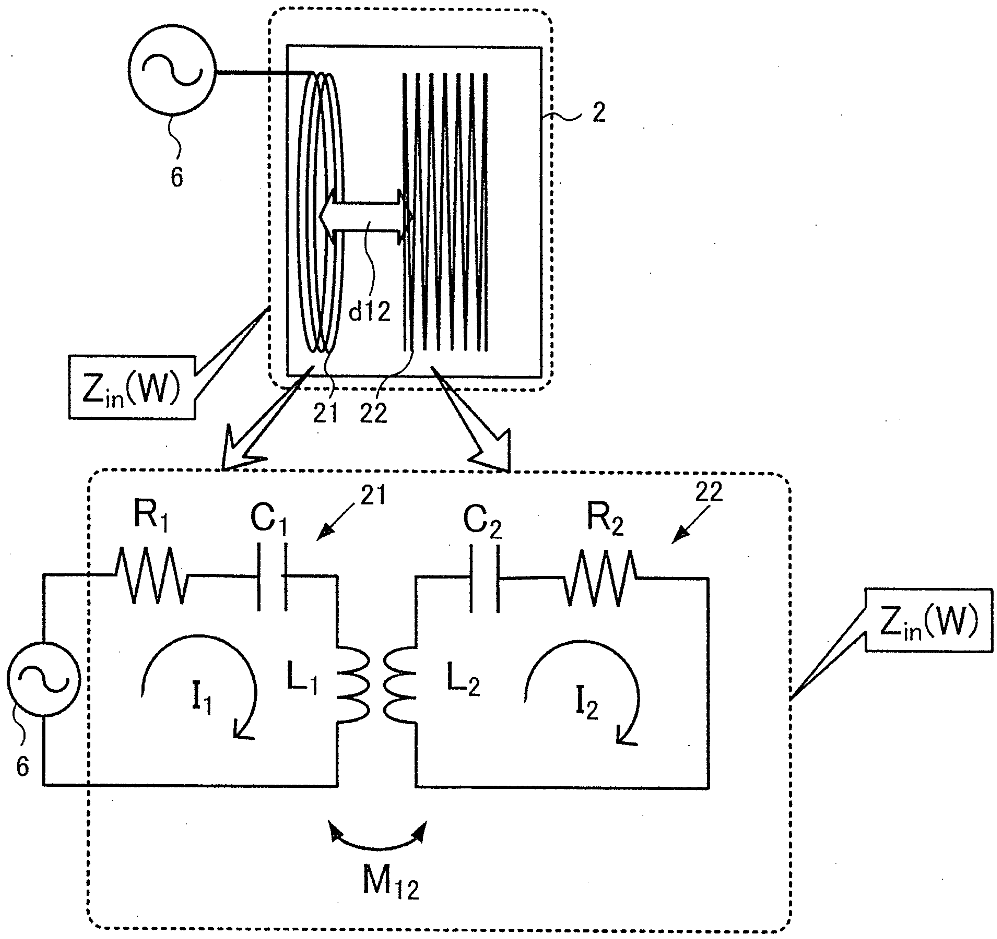

FIG.11

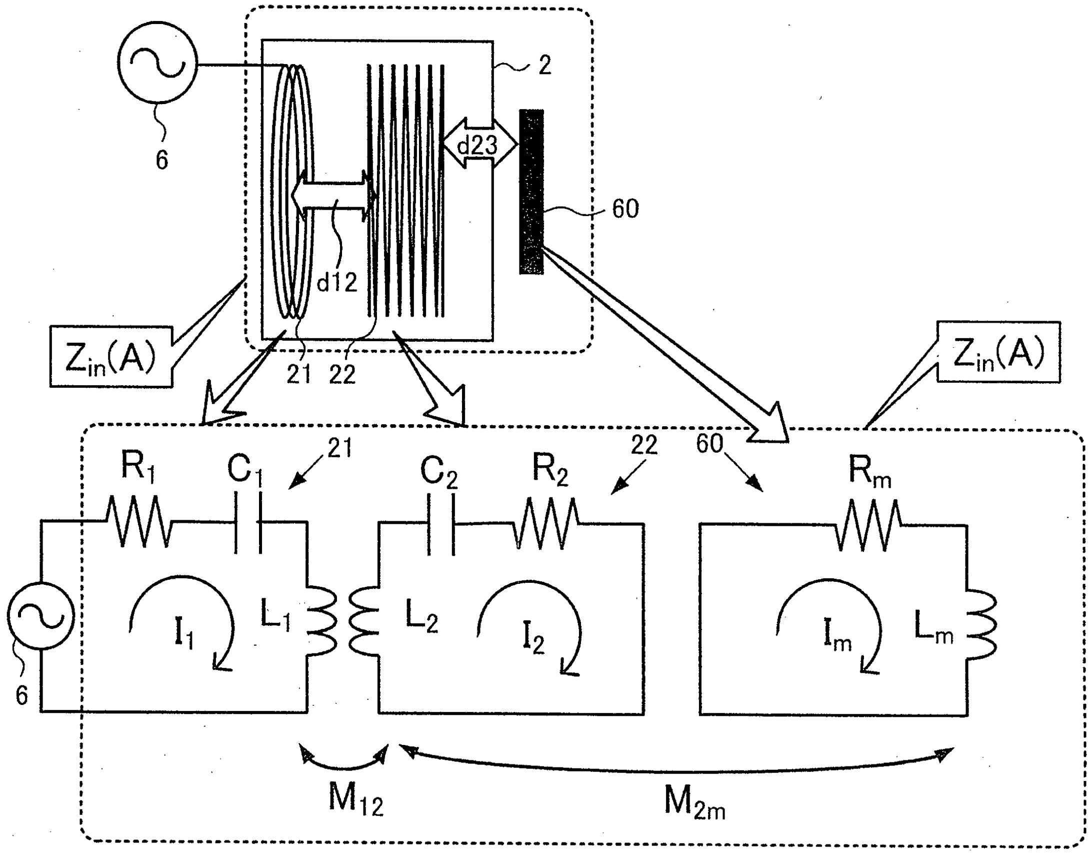

2
6
d23
60
d12
21
22
Zin(A)
Zin(A)
R1
C1
21
C2
R2
22
60
Rm
I1
L1
L2
I2
Im
Lm
6
M12
M2m

FIG.12A

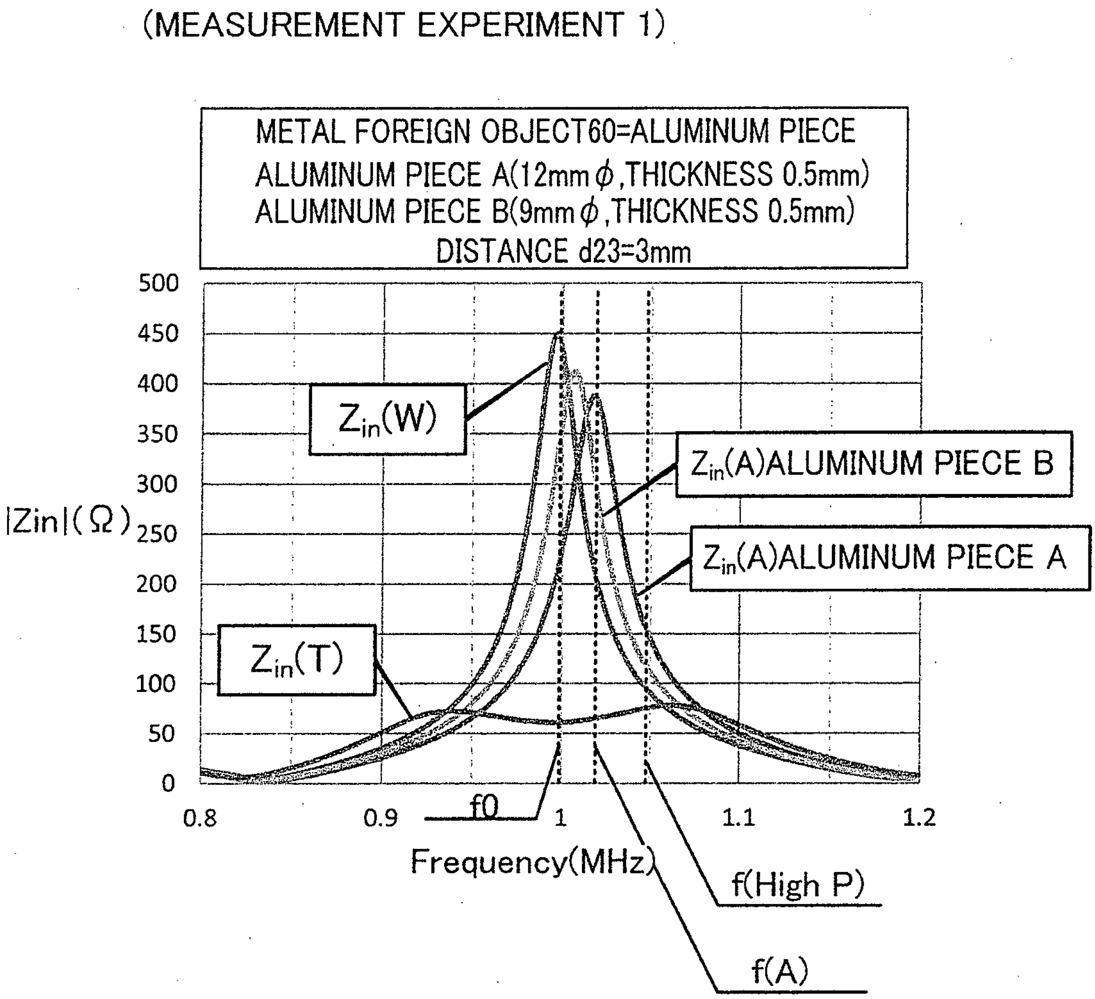
(MEASUREMENT EXPERIMENT 1)
METAL FOREIGN OBJECT60=ALUMINUM PIECE
ALUMINUM PIECE A(12mm φ,THICKNESS 0.5mm)
ALUMINUM PIECE B(9mm φ,THICKNESS 0.5mm)
DISTANCE d23=3mm
500
450
400
350
300
250
200
150
100
50
0
|Zin|(Ω)
Zin(W)
Zin(A)ALUMINUM PIECE B
Zin(A)ALUMINUM PIECE A
Zin(T)
0.8
0.9
1
1.1
1.2
f0
Frequency(MHz)
f(High P)
f(A)

FIG.12B

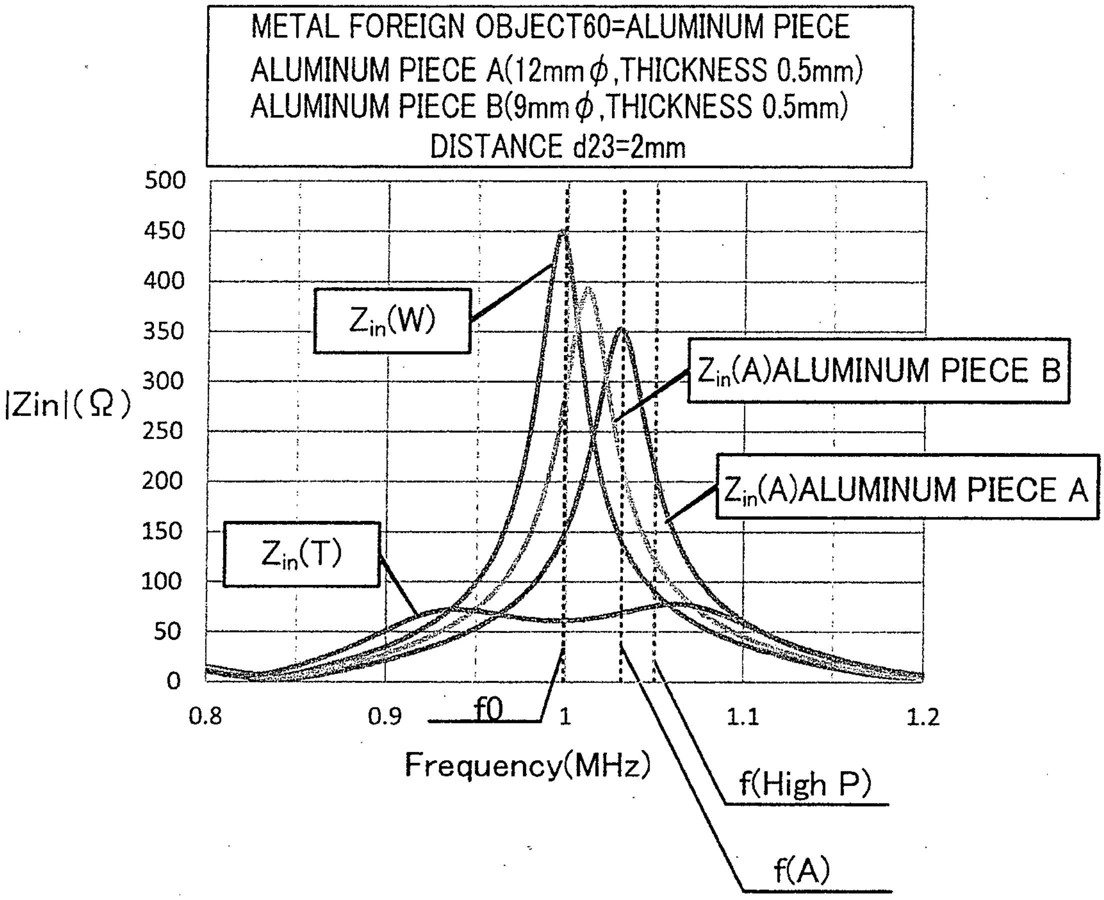
METAL FOREIGN OBJECT60=ALUMINUM PIECE
ALUMINUM PIECE A(12mmφ,THICKNESS 0.5mm)
ALUMINUM PIECE B(9mmφ,THICKNESS 0.5mm)
DISTANCE d23=2mm
|Zin|(Ω)
500
450
400
350
300
250
200
150
100
50
0
0.8
0.9
1
1.1
1.2
Frequency(MHz)
Zin(W)
Zin(A)ALUMINUM PIECE B
Zin(A)ALUMINUM PIECE A
Zin(T)
f0
f(High P)
f(A)

FIG.13A

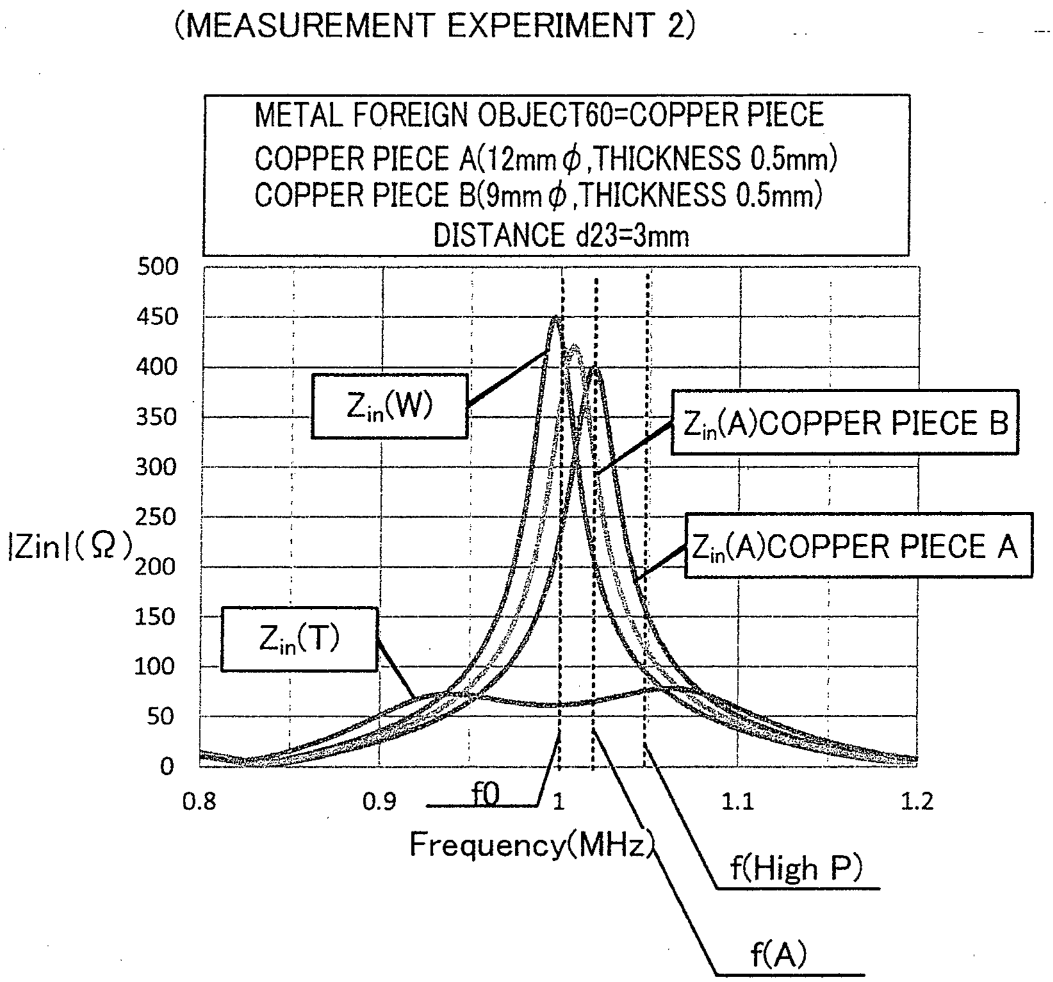
(MEASUREMENT EXPERIMENT 2)
METAL FOREIGN OBJECT60=COPPER PIECE
COPPER PIECE A(12mmφ,THICKNESS 0.5mm)
COPPER PIECE B(9mmφ,THICKNESS 0.5mm)
DISTANCE d23=3mm
|Zin|(Ω)
500
450
400
350
300
250
200
150
100
50
0
0.8
0.9
1
1.1
1.2
Frequency(MHz)
Zin(W)
Zin(A)COPPER PIECE B
Zin(A)COPPER PIECE A
Zin(T)
f0
f(High P)
f(A)

FIG.13B

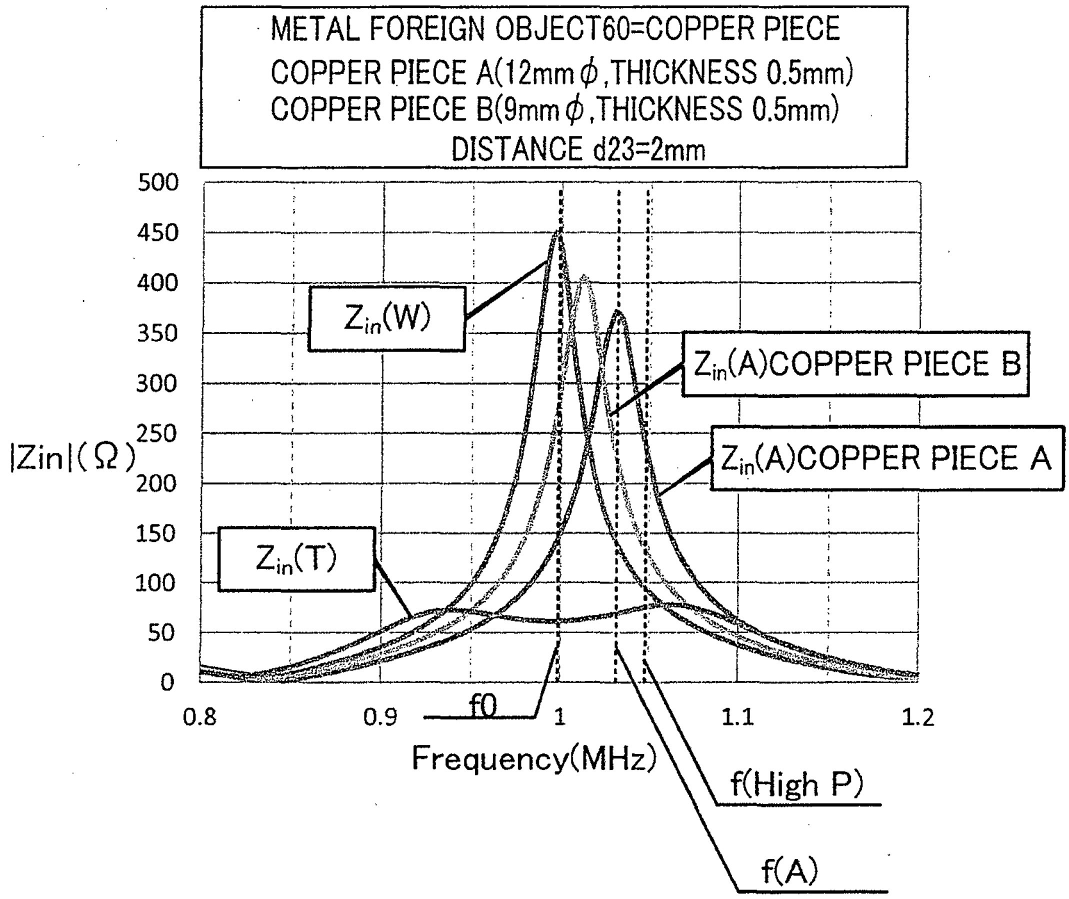
METAL FOREIGN OBJECT60=COPPER PIECE
COPPER PIECE A(12mmϕ,THICKNESS 0.5mm)
COPPER PIECE B(9mmϕ,THICKNESS 0.5mm)
DISTANCE d23=2mm
500
450
400
350
300
250
200
150
100
50
0
|Zin|(Ω)
$Z_{in}$(W)
$Z_{in}$(A)COPPER PIECE B
$Z_{in}$(A)COPPER PIECE A
$Z_{in}$(T)
0.8
0.9
1
1.1
1.2
f0
Frequency(MHz)
f(High P)
f(A)

FIG.14A

(MEASUREMENT EXPERIMENT 3)

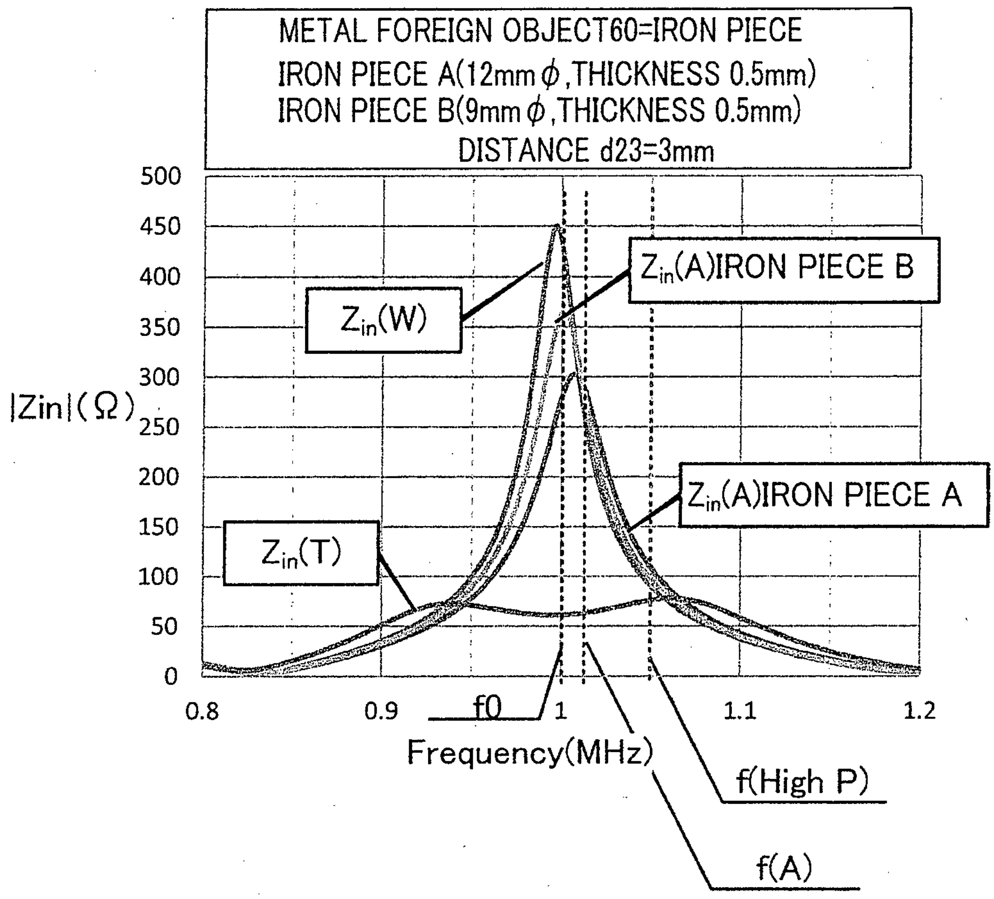

FIG.14B

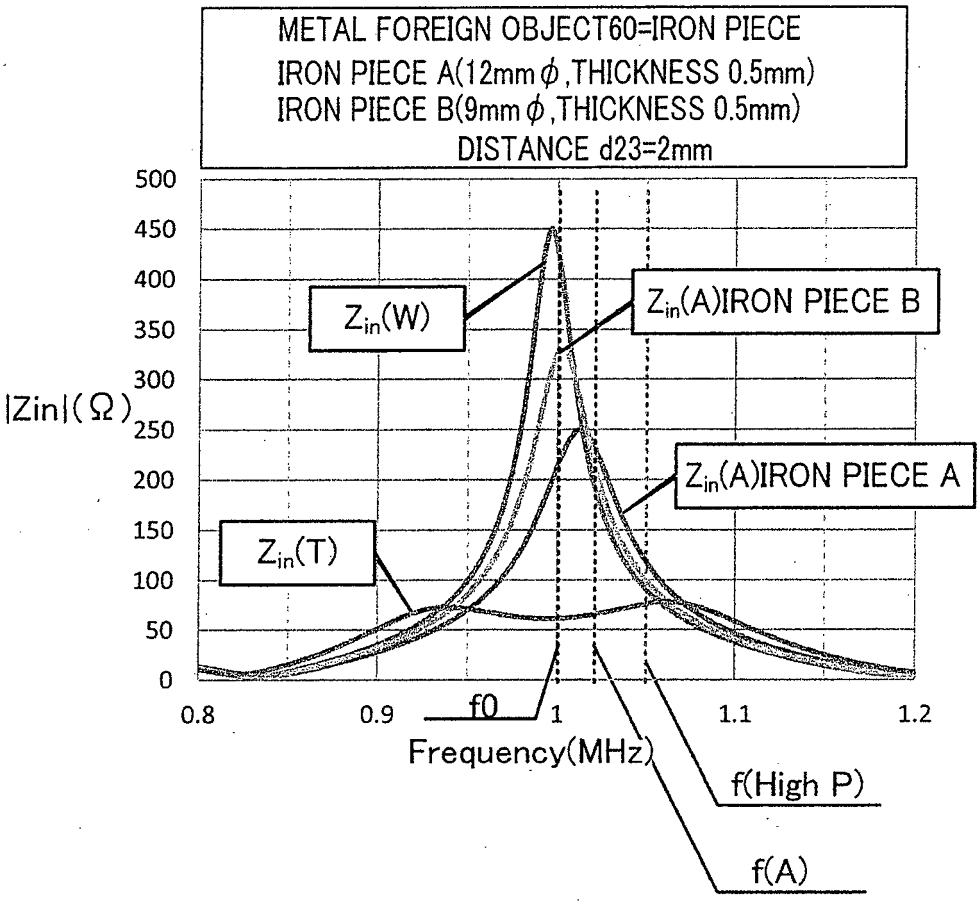
METAL FOREIGN OBJECT60=IRON PIECE
IRON PIECE A(12mmφ,THICKNESS 0.5mm)
IRON PIECE B(9mmφ,THICKNESS 0.5mm)
DISTANCE d23=2mm
500
450
400
350
300
250
200
150
100
50
0
|Zin|(Ω)
Zin(W)
Zin(A)IRON PIECE B
Zin(A)IRON PIECE A
Zin(T)
0.8
0.9
1
1.1
1.2
f0
Frequency(MHz)
f(High P)
f(A)

FIG.15A

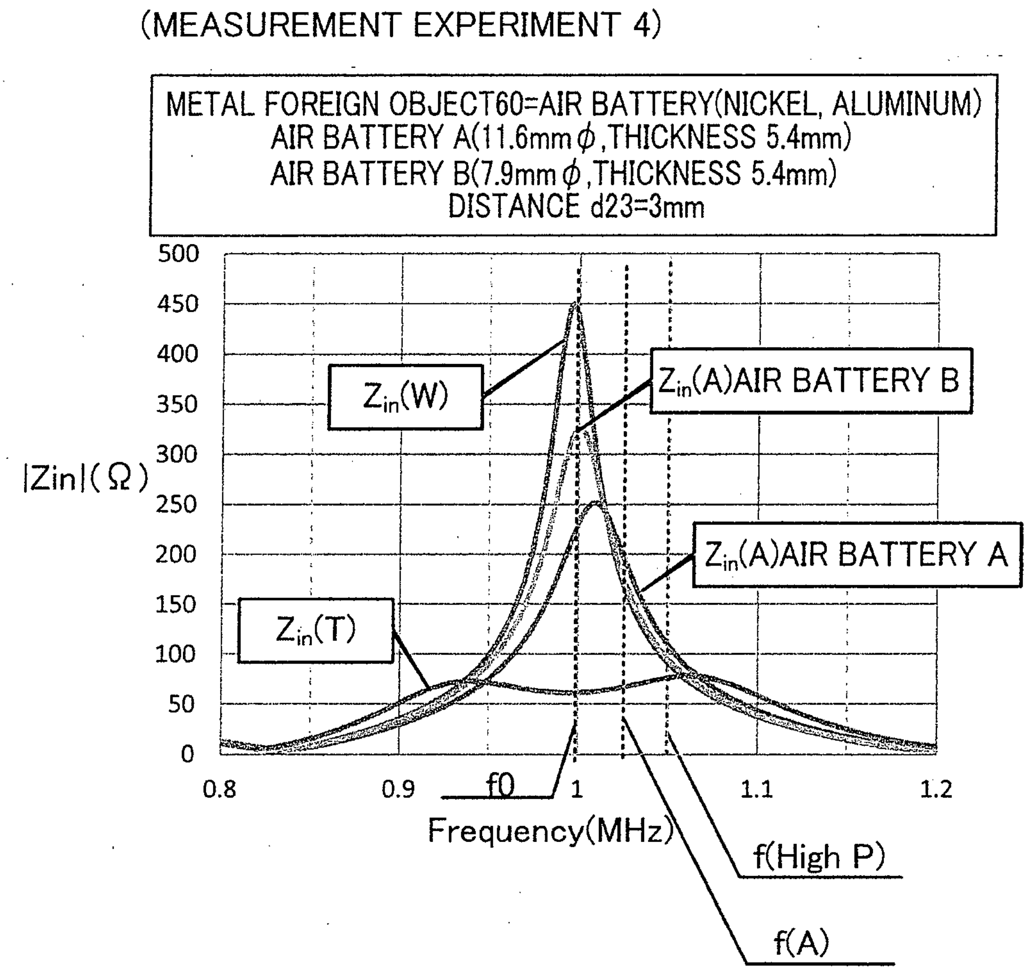
(MEASUREMENT EXPERIMENT 4)
METAL FOREIGN OBJECT60=AIR BATTERY(NICKEL, ALUMINUM)
AIR BATTERY A(11.6mmφ,THICKNESS 5.4mm)
AIR BATTERY B(7.9mmφ,THICKNESS 5.4mm)
DISTANCE d23=3mm
|Zin|(Ω)
500
450
400
350
300
250
200
150
100
50
0
0.8
0.9
1
1.1
1.2
Frequency(MHz)
Zin(W)
Zin(A)AIR BATTERY B
Zin(A)AIR BATTERY A
Zin(T)
f0
f(High P)
f(A)

FIG.15B

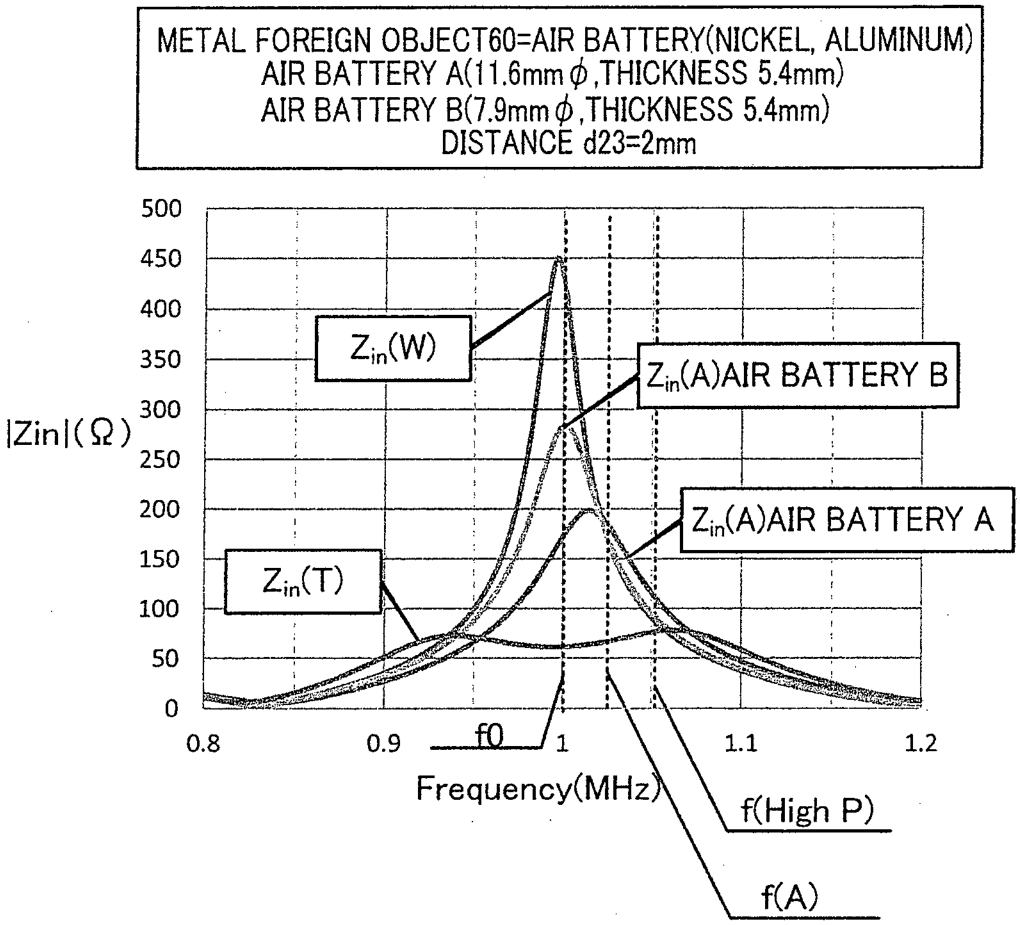
METAL FOREIGN OBJECT60=AIR BATTERY(NICKEL, ALUMINUM)
AIR BATTERY A(11.6mm φ,THICKNESS 5.4mm)
AIR BATTERY B(7.9mm φ,THICKNESS 5.4mm)
DISTANCE d23=2mm
|Zin|(Ω)
500
450
400
350
300
250
200
150
100
50
0
0.8
0.9
1
1.1
1.2
Frequency(MHz)
Zin(W)
Zin(A)AIR BATTERY B
Zin(A)AIR BATTERY A
Zin(T)
f0
f(High P)
f(A)

FIG.16

(MEASUREMENT EXPERIMENT 5)

| | STANDBY | ALUMINUM | | COPPER | | IRON | | AIR BATTERY | | CHARGING |
|---|---|---|---|---|---|---|---|---|---|---|
| \|Zin\| | — | 12φ × 0.5mm | 9φ × 0.5mm | 12φ × 0.5mm | 9φ × 0.5mm | 12φ × 0.5mm | 9φ × 0.5mm | 11.9φ × 5.4mm | 7.9φ × 5.4mm | DISTANCE 3mm |
| METAL 3 mm(Ω) | 84.1 | 117.3 | 96.8 | 121.0 | 96.8 | 92.2 | 88.0 | 94.4 | 86.0 | 69.1 |
| METAL 2 mm(Ω) | 84.1 | 168.3 | 110.6 | 162.6 | 110.6 | 101.9 | 90.0 | 101.9 | 88.0 | 58.6 |

FIG.17

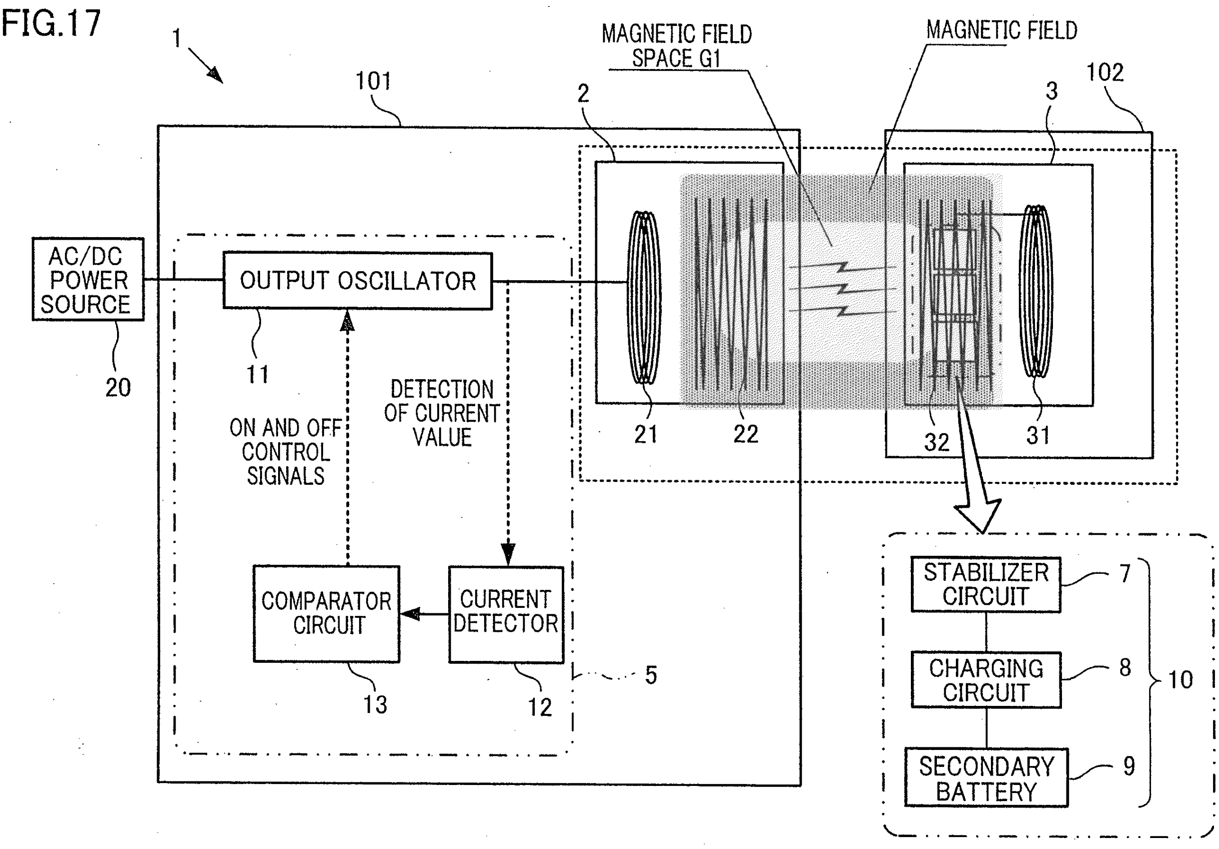
1
101
MAGNETIC FIELD SPACE G1
MAGNETIC FIELD
102
2
3
AC/DC POWER SOURCE
OUTPUT OSCILLATOR
20
11
ON AND OFF CONTROL SIGNALS
DETECTION OF CURRENT VALUE
21
22
32
31
COMPARATOR CIRCUIT
CURRENT DETECTOR
13
12
5
STABILIZER CIRCUIT
7
CHARGING CIRCUIT
8
10
SECONDARY BATTERY
9

FIG.18

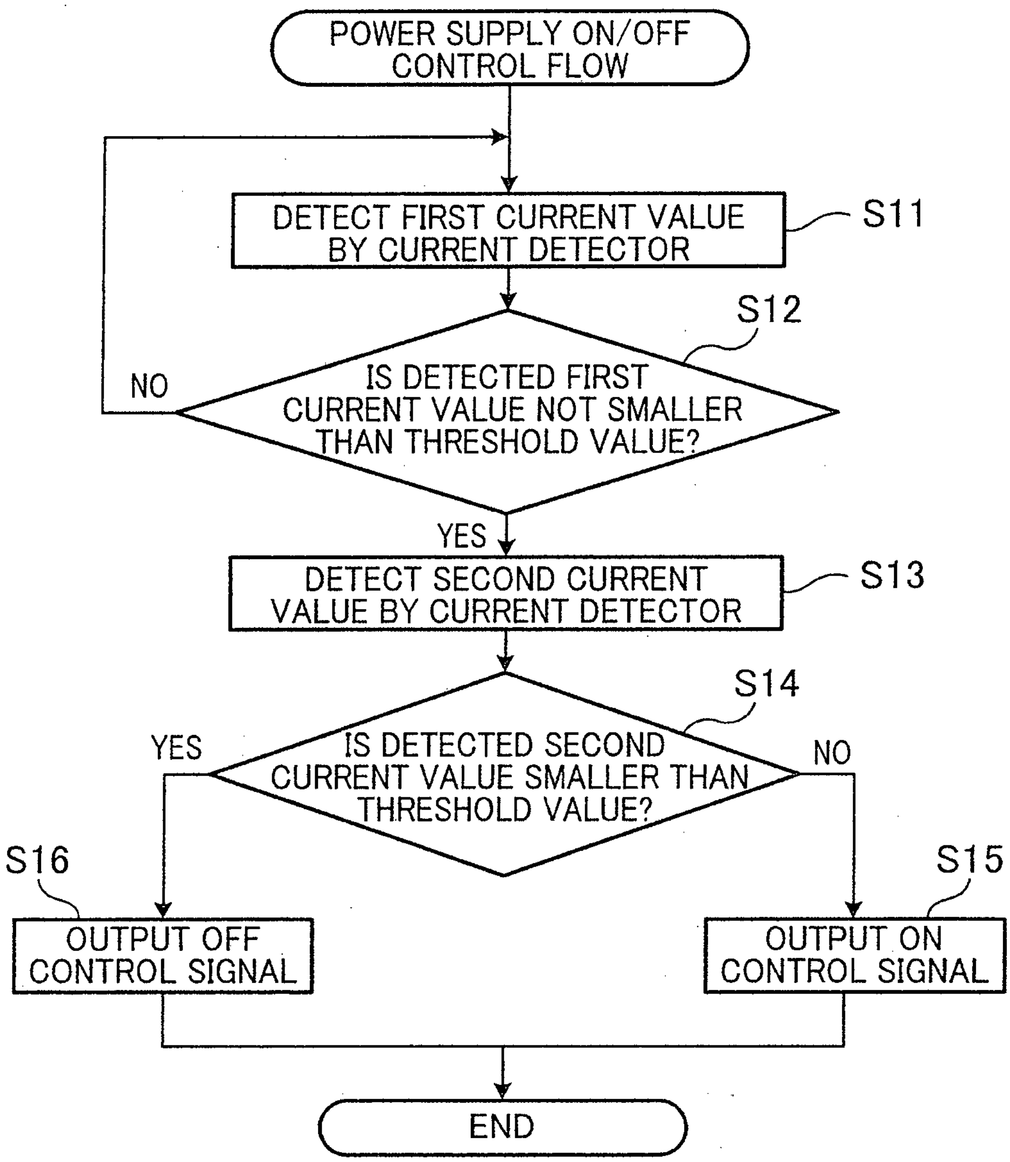
POWER SUPPLY ON/OFF CONTROL FLOW
DETECT FIRST CURRENT VALUE BY CURRENT DETECTOR
S11
S12
IS DETECTED FIRST CURRENT VALUE NOT SMALLER THAN THRESHOLD VALUE?
NO
YES
DETECT SECOND CURRENT VALUE BY CURRENT DETECTOR
S13
S14
IS DETECTED SECOND CURRENT VALUE SMALLER THAN THRESHOLD VALUE?
YES
NO
S16
OUTPUT OFF CONTROL SIGNAL
S15
OUTPUT ON CONTROL SIGNAL
END

## INTERNATIONAL SEARCH REPORT

International application No.
PCT/JP2015/050170

A. CLASSIFICATION OF SUBJECT MATTER
*H02J17/00*(2006.01)i, *H02J7/00*(2006.01)i

According to International Patent Classification (IPC) or to both national classification and IPC

B. FIELDS SEARCHED

Minimum documentation searched (classification system followed by classification symbols)
H02J17/00, H02J7/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2013-126307 A (Equos Research Co., Ltd.), 24 June 2013 (24.06.2013), entire text; all drawings (Family: none) | 1,3-7 |
| A | JP 2013-158188 A (Equos Research Co., Ltd.), 15 August 2013 (15.08.2013), entire text; all drawings (Family: none) | 1-7 |
| A | JP 2013-062895 A (Sony Corp.), 04 April 2013 (04.04.2013), entire text; all drawings & US 2014/0225452 A1 & WO 2013/038808 A1 & CN 103782485 A & KR 10-2014-0065396 A | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 February 2015 (16.02.15) | 24 February 2015 (24.02.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/050170

C (Continuation). DOCUMENTS CONSIDERED TO BE RELEVANT

| Category* | Citation of document, with indication, where appropriate, of the relevant passages | Relevant to claim No. |
|---|---|---|
| A | WO 2011/142419 A1 (Toyota Industries Corp.), 17 November 2011 (17.11.2011), entire text; all drawings & JP 2011-244531 A & US 2013/0063085 A1 | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4624768 B
- JP 2013239692 A
- JP 2011050140 A
- JP 2012182975 A